(19) Europäisches Patentamt
European Patent Office
Office européen des brevets

(11) **EP 4 285 176 B1**

(12) **EUROPÄISCHE PATENTSCHRIFT**

(45) Veröffentlichungstag und Bekanntmachung des Hinweises auf die Patenterteilung:
**11.02.2026   Patentblatt 2026/07**

(21) Anmeldenummer: **22728081.5**

(22) Anmeldetag: **05.05.2022**

(51) Internationale Patentklassifikation (IPC):
*G02B 26/10* *(2006.01)*

(52) Gemeinsame Patentklassifikation (CPC):
**G02B 26/101; G02B 26/0833; G02B 26/105; G02B 27/646; G09G 3/025; H04N 9/3135**

(86) Internationale Anmeldenummer:
**PCT/EP2022/062086**

(87) Internationale Veröffentlichungsnummer:
**WO 2022/268392 (29.12.2022 Gazette 2022/52)**

(54) **PROJEKTIONSSYSTEM ZUM PROJIZIEREN VON LISSAJOUS-FIGUREN UND MIKROSCANNER MIT GEKOPPELTEN OSZILLATOREN**

PROJECTION SYSTEM FOR PROJECTING LISSAJOUS FIGURES AND MICROSCANNER WITH COUPLED OSCILLATORS

SYSTÈME DE PROJECTION POUR LA PROJECTION DE FIGURES DE LISSAJOUS ET MICROSCANNER À OSCILLATEURS COUPLÉS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2021   DE 102021116151**

(43) Veröffentlichungstag der Anmeldung:
**06.12.2023   Patentblatt 2023/49**

(73) Patentinhaber: **OQmented GmbH**
**25524 Itzehoe (DE)**

(72) Erfinder:
  • **POHL, Leon**
    **24223 Schwentinental (DE)**
  • **HOFMANN, Ulrich**
    **25524 Itzehoe (DE)**
  • **VAN WANTOCH, Thomas**
    **24159 Kiel (DE)**
  • **BLICHARSKI, Peter**
    **45134 Essen (DE)**
  • **PETRAK, Oleg**
    **25524 Itzehoe (DE)**
  • **JANICKE, Christian**
    **24113 Kiel (DE)**

(74) Vertreter: **Platzöder Patentanwaltsgesellschaft mbH**
**Inselkammerstraße 10**
**82008 Unterhaching (DE)**

(56) Entgegenhaltungen:
EP-A1- 3 173 843          EP-A1- 3 447 560
EP-A1- 3 751 328          US-A1- 2012 320 379
US-A1- 2019 162 948

**Beschreibung**

Die vorliegende Erfindung betrifft einen ein Projektionssystem zum Projizieren von Lissajous-Figuren auf ein Beobachtungsfeld, sowie einen Mikroscanner für ein solches Projektionssystem.

Bei Mikroscannern, die in der Fachsprache insbesondere auch als "MEMS-Scanner", "MEMS-Spiegel" oder auch "Mikrospiegel" oder im Englischen insbesondere als "microscanner" bzw. "micro-scanning mirror" oder "MEMS mirror" bezeichnet werden, handelt es sich um mikro-elektro-mechanische Systeme (MEMS) oder genauer um mikro-optoelektro-mechanische Systeme (MOEMS) aus der Klasse der Mikrospiegelaktoren zur dynamischen Modulation von elektromagnetischer Strahlung, insbesondere von sichtbarem Licht. Je nach Bauart kann die modulierend wirkende Bewegung eines Einzelspiegels translatorisch oder um zumindest eine Achse rotatorisch erfolgen. Im ersten Fall wird eine phasenschiebende Wirkung, im zweiten Fall, die Ablenkung der einfallenden elektromagnetischen Strahlung erzielt. Im Weiteren werden Mikroscanner betrachtet, bei denen die modulierend wirkende Bewegung eines Einzelspiegels rotatorisch erfolgt. Bei Mikroscannern wird die Modulation, in Abgrenzung gegenüber Spiegelarrays, bei denen die Modulation von einfallendem Licht über das Zusammenwirken mehrerer Spiegel erfolgt, über einen einzelnen Spiegel erzeugt.

Mikroscanner können insbesondere zur Ablenkung von elektromagnetischer Strahlung eingesetzt werden, um mittels eines Ablenkelements ("Spiegel") einen darauf einfallenden elektromagnetischen Strahl bezüglich seiner Ablenkrichtung zu modulieren. Das kann insbesondere genutzt werden, um eine Lissajous-Projektion des Strahls in ein Beobachtungsfeld zu bewirken. So lassen sich beispielsweise bildgebende sensorische Aufgaben lösen oder auch Display-Funktionalitäten realisieren. Darüber hinaus können solche Mikroscanner auch dazu eingesetzt werden, Materialien in vorteilhafter Weise zu bestrahlen und so auch zu bearbeiten. Mögliche andere Anwendungen liegen im Bereich der Beleuchtung oder Ausleuchtung bestimmter offener oder geschlossener Räume oder Raumbereiche mit elektromagnetischer Strahlung, beispielsweise im Rahmen von Scheinwerferanwendungen.

Sowohl im Falle bildgebender Sensorik als auch im Falle einer Display-Funktion dient ein Strahlablenksystem, insbesondere ein Mikroscanner, dazu, elektromagnetische Strahlung wie z.B. einen Laserstrahl oder aber einen geformten Strahl einer beliebigen anderen Quelle elektromagnetischer Strahlung mindestens zweidimensional, z.B. horizontal und vertikal, abzulenken, um damit Objektoberflächen innerhalb eines Beobachtungsfeldes abzutasten bzw. auszuleuchten.

Aus der EP 2 514 211 B1 ist eine Ablenkeinrichtung für ein Projektionssystem zum Projizieren von Lissajous-Figuren auf ein Beobachtungsfeld bekannt, die ausgebildet ist, einen Lichtstrahl um mindestens eine erste und eine zweite Ablenkachse zur Erzeugung der Lissajous-Figuren umzulenken. Die Ablenkeinrichtung verfügt über eine Ablenkeinheit zur Erzeugung von Schwingungen um die Ablenkachsen und über eine Ansteuervorrichtung zur Erzeugung von Ansteuersignalen für die Ablenkeinheit mit einer ersten und zweiten Ansteuerfrequenz, die den Resonanzfrequenzen der Ablenkeinheit entsprechen. Dabei weist die Ablenkeinheit einen Gütefaktor von größer als 3.000 auf. Die Ansteuervorrichtung umfasst einen ersten Regelkreis, der ausgebildet ist, abhängig von einer gemessenen Phasenlage der Schwingungen der Ablenkeinheit die erste und/oder die zweite Ansteuerfrequenz so zu regeln, dass die maximale Amplitude der Schwingungen in dem Resonanzbereich der Ablenkeinheit verbleibt, wobei die Ansteuerfrequenzen kein festes ganzzahliges Verhältnis aufweisen. Die Ansteuervorrichtung weist zudem einen zweiten Regelkreis auf, der ausgebildet ist, abhängig von einer durch die Ansteuerfrequenzen vorgegebenen Liniendichte der Lissajous-Figuren die Resonanzfrequenz der ersten und/oder der zweiten Ablenkachsen so zu beeinflussen, dass die Liniendichte in einem vorgegebenen Toleranzbereich liegt. Die beiden Ablenkachsen sind dabei mittels einer kardanischen Aufhängung (Gimbal) entkoppelt, so dass die zugehörigen Schwingungen um die beiden Achsen vollständig voneinander entkoppelt erfolgen und auch vollständig unabhängig voneinander mit dem Ziel phasen-geregelt werden, jede der beiden Achsen in Resonanz zu halten.

Es gilt dabei für die Ablenkeinrichtung aus der EP 2 514 211 B1 die Beziehung

$$f_{1R} \neq f_{2R}, \qquad\qquad\qquad (1)$$

wobei $f_{1R}$ die Resonanzfrequenz der ersten Achse und $f_{2R}$ die Resonanzfrequenz der zweiten Achse bezeichnet. Für das mechanische Drehmoment $T_1$ bzw. $T_2$, welches die ausgelenkte Feder der ersten beziehungsweise zweiten Achse erzeugt gilt:

$$T_1 = k_1 * \theta_1 \text{ und } T_2 = k_2 * \theta_2, \qquad\qquad\qquad (2)$$

wobei $\theta_1$ und $\theta_2$ die jeweilige mechanische Amplitude (Auslenkwinkel) des Spiegels in der ersten Achse bzw. in der zweiten Achse und $k_1$ und $k_2$ die jeweilige Federkonstante der Feder der ersten Achse bzw. der zweiten Achse bezeichnen. Aufgrund der Entkopplung der Schwingungsachsen ist es bei derartigen gimbalbasierten Mikroscannern insbesondere leicht möglich, eine zumindest annähernd rechteckige Ausleuchtung des Beobachtungsfelds durch Lissajous-Figuren zu erreichen.

Neben solchen gimbalbasierten Mikroscannern mit vollständig entkoppelten Achsen sind jedoch auch Typen von Mikroscannern ohne Gimbal (sog. "Gimballess-Spiegel" oder "gimballose" Mikroscanner bzw. Spiegel) bekannt, die zwei oder mehr Schwingungsachsen ohne Verwendung einer kardanischen Aufhängung des Spiegels realisieren und bei denen eine nicht vernachlässigbare, insbesondere eine starke Kopplung zwischen den einzelnen Schwingungsachsen auftreten kann. Die Stärke einer solchen Kopplung kann dabei insbesondere amplitudenabhängig sein.

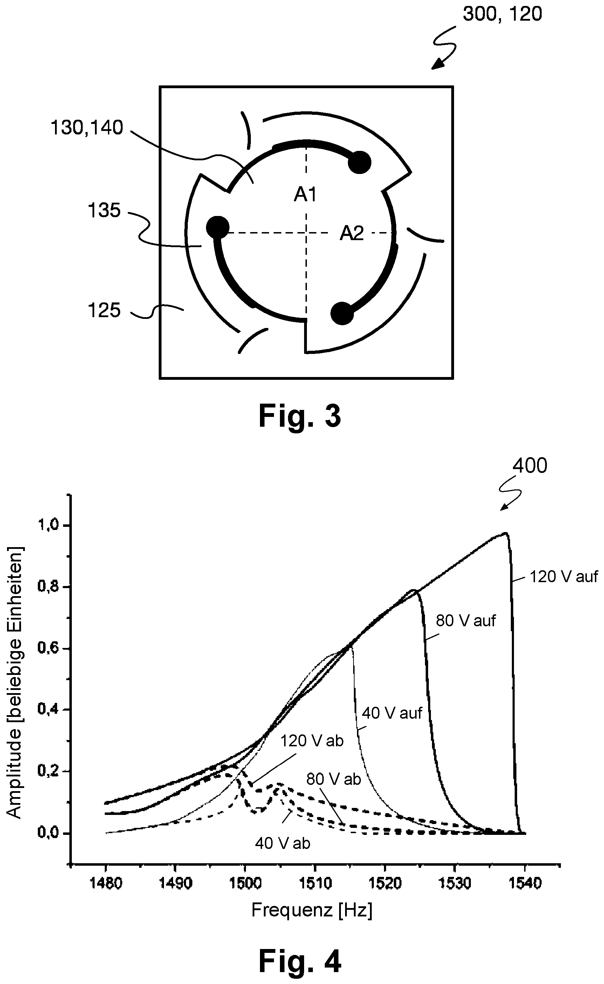

Beispielhaft sei hier ein Mikroscannertyp genannt, der so aufgebaut ist, dass er eine Ablenkeinheit aufweist mit einer Spiegelplatte, die an einem sie umgebenden Rahmen mittels dreier rotationssymmetrisch angeordneter Federelemente aufgehängt ist, so dass sich ein biaxialer Mikroscanner ergibt. Eine Variante eines solchen Mikroscannertyps, die in **Fig. 3** illustriert ist, ist unter dem Namen "Minifaros"-Spiegel bekannt und insbesondere in Hofmann et al.: Resonant biaxial 7-mm MEMS mirror for omnidirectional scanning; J. Micro/Nanolith. MEMS MOEMS, 3-11 Jan-Mar 2014/Vol. 13(1) beschrieben.

Aufgrund der Kopplungen zwischen den Schwingungsachsen bzw. den zugehörigen jeweiligen Oszillationen des Spiegels um je eine dieser Schwingungsachsen, neigen Gimballess-Spiegel dazu, die Resonanzfrequenzen bezüglich der verschiedenen Schwingungsachsen beim Aufschwingen schnell einander anzunähern, so dass in der Folge eine im Wesentlichen nur ellipsenförmige (und somit linienhafte, nicht-flächige) Lissajous-Ausleuchtung des Beobachtungsfelds auftritt. Insbesondere wird so eine zumindest näherungsweise flächige, insbesondere eine zumindest annähernd rechteckige Ausleuchtung des Beobachtungsfelds erschwert oder gar unmöglich gemacht.

Weitere Mikroscanner sind in den folgenden Dokumenten offenbart:

In US 2012/0320379 A1 wird eine Ablenkvorrichtung für einen Scanner mit Lissajous-Abtastung mit einem in mindestens zwei Ablenkachsen schwingenden Mikrospiegel beschrieben, der einen Rahmen und eine über eine Aufhängung beweglich angeordnete Spiegelplatte aufweist, und mit einer Ansteuervorrichtung zur Erzeugung von Ansteuersignalen für einen resonanten Betrieb des Mikrospiegels in den mindestens zwei Ablenkachsen vorgeschlagen. Die Aufhängung der Spiegelplatte weist mindestens eine Feder auf, die einerseits mit der Spiegelplatte und andererseits mit dem feststehenden Rahmen verbunden ist. Die Frequenzen der Ansteuersignale für den resonanten Betrieb des Mikrospiegels in den mindestens zwei Ablenkachsen sind im Wesentlichen gleich, aber unterscheiden sich mindestens um die vorgegebene Abtastwiederholrate. In ihrer Höhe sind die Resonanzfrequenzen der Ablenkachsen und damit die Frequenzen der Ansteuersignale durch eine vorgegebene Auflösung der Abtastung und eine vorgegebene Abtastwiederholrate bestimmt.

In EP 3447560 A1 ist ein kompaktes und robustes mikroelektromechanisches Reflektorsystem beschrieben, das einen Träger, einen Reflektor, eine Umfangskante des Reflektors mit Kantenpunkten und Aufhängungen mit piezoelektrischen Aktoren umfasst, die den Reflektor am Träger aufhängen. Zwei Paare von Aufhängungen sind von zwei Befestigungspunkten aus an dem Träger befestigt, sodass in jedem Paar von Aufhängungen die ersten Enden eines Paares von Aufhängungen an einem gemeinsamen Befestigungspunkt des Paares befestigt sind. Eine erste Drehachse ist auf eine durch die beiden Befestigungspunkte verlaufende Linie ausgerichtet und teilt den Reflektor in einen ersten Reflektorteil und einen zweiten Reflektorteil. Bei jedem Paar von Aufhängungen ist ein zweites Ende der einen Aufhängung mit dem ersten Reflektorteil und ein zweites Ende der anderen Aufhängung mit dem zweiten Reflektorteil verbunden.

In EP 3173843 A1 ist MEMS-Vorrichtung beschrieben mit: einer festen Struktur einer beweglichen Struktur, die ein reflektierendes Element umfasst; einer ersten verformbaren Struktur und einer zweiten verformbaren Struktur, die zwischen der festen Struktur und der beweglichen Struktur angeordnet sind. Jede der ersten und zweiten verformbaren Strukturen umfasst eine entsprechende Anzahl von piezoelektrischen Hauptelementen. Die piezoelektrischen Hauptelemente der ersten und zweiten verformbaren Struktur können elektrisch gesteuert werden, um Schwingungen der beweglichen Struktur um eine erste Achse bzw. eine zweite Achse zu bewirken. Die erste verformbare Struktur umfasst ferner eine entsprechende Anzahl sekundärer piezoelektrischer Elemente, die elektrisch gesteuert werden können, um eine erste Resonanzfrequenz der beweglichen Struktur um die erste Achse zu verändern.

EP 3751328 A1 beschreibt ein mikroelektromechanisches System, insbesondere ein Spiegelsystem, das z.B. in LiDAR (Light Detection and Ranging) eingesetzt werden kann, wobei das MEMS-Spiegelsystem vier Aufhängungen verwendet, von denen jede mit dem Reflektorkörper an zwei separaten Verbindungspunkten verbunden ist, die unabhängig voneinander durch piezoelektrische Aktoren verschoben werden können. Durch Betätigung benachbarter und gegenüberliegender Paare von piezoelektrischen Aktuatoren kann der Reflektorkörper zu Schwingungen um zwei orthogonale Achsen angeregt werden.

US 2019/0162948 A1 beschreibt eine Vorrichtung, die ein Reflektorsystem und eine Rückkopplungsschaltung aufweist. Das Reflektorsystem weist einen Träger, einen Reflektor und eine Federstruktur auf, die den Reflektor für eine Abtastbewegung des Reflektors in zwei orthogonalen Oszillationsmodi an dem Träger aufhängt. Jeder Oszillationsmodus weist einen Frequenzgang auf, der bei einer natürlichen Resonanzfrequenz mit einer anfänglichen Bandbreite seinen Höhepunkt erreicht. Das Reflektorsystem umfasst eine erste Wandlerstruktur zur mechanischen Betätigung des Reflektors und eine zweite Wandlerstruktur zum Erzeugen eines oder mehrerer Erfassungssignale, die eine mechanische Bewegung des Reflektors darstellen. Die Rückkopplungsschaltung ist dazu ausgebildet, von einem Wandler der zweiten Wandlerstruktur ein Erfassungssignal zu empfangen und an einen Wandler der ersten Wandlerstruktur ein Antriebssignal auf der Basis des empfangenen Erfassungssignals zu erzeugen. Für jeden der zwei Oszillationsmodi ist die Rückkopplungsschaltung dazu ausgebildet, eine Amplitude und Frequenz des Antriebssignals auf einen nicht-linearen Schwingungsbereich einzustellen, bei dem eine Frequenzverschiebung bei der Spitzenfrequenz zumindest das Zehnfache der anfänglichen Bandbreite beträgt die Amplitude des Antriebssignals im Verhältnis zu einer Wellenform eines Modulationssignals zu variieren; und eine Frequenz der Modulationssignalkomponente dahingehend festzulegen, kleiner als die Frequenzverschiebung bei der Spitzenfrequenz zu sein. Die Konfiguration stellt eine einfache Weise dar, einen Bildbereich eines Abtastmikrospiegels zu verbreitern.

Der vorliegenden Erfindung liegt die Aufgabe zugrunde, einen verbesserten gimballosen Mikroscanner mit gekoppelten Schwingungsachsen sowie ein damit ausgerüstetes Projektionssystem bereitzustellen, mit dem eine flächige Lissajous-Ausleuchtung des Beobachtungsfelds möglich ist. Insbesondere ist es wünschenswert, eine Möglichkeit zur Erreichung einer zumindest annähernd rechteckigen Ausleuchtung durch einen solchen Mikroscanner zu schaffen.

Die Lösung dieser Aufgabe wird gemäß der Lehre der unabhängigen Ansprüche erreicht. Verschiedene Ausführungsformen und Weiterbildungen der Erfindung sind Gegenstand der Unteransprüche.

Ein erster Aspekt der Erfindung betrifft einen Mikroscanner für ein Projektionssystem zum Projizieren von Lissajous-Figuren auf ein Beobachtungsfeld. Der Mikroscanner weist eine Ablenkeinheit auf mit (i) einem Ablenkelement zum Ablenken, insbesondere mittels Reflektion, eines einfallenden elektromagnetischen Strahls, (ii) einer Tragestruktur und (iii) einer Federeinrichtung. Die Federeinrichtung kann dabei eine oder mehrere Federelemente aufweisen. Das Ablenkelement ist mittels der Federeinrichtung gimballos (engl. gimbal-less, d.h. nicht-kardanisch) so an der Tragestruktur aufgehängt, dass es relativ zur Tragestruktur simultan eine erste rotatorische Oszillation um eine erste Schwingungsachse sowie eine zweite rotatorische Oszillation um eine dazu orthogonale zweite Schwingungsachse ausführen kann, um durch Ablenken eines während der simultanen Oszillationen auf das Ablenkelement einfallenden elektromagnetischen Strahls eine nichtlineare Lissajous-Projektion in ein Beobachtungsfeld zu bewirken.

Der Mikroscanner weist des Weiteren eine Steuerungseinrichtung auf, die konfiguriert ist, eine Antriebseinrichtung zum Antrieb der Ablenkeinheit so anzusteuern, dass dabei eine jeweilige, insbesondere resonante, Antriebswirkung bezüglich zumindest einer der Oszillationen des Ablenkelements individuell einstellbar ist.

Die Federeinrichtung ist des Weiteren so ausgebildet, dass sie eine amplitudenabhängige gegenseitige Kopplung zwischen den Oszillationen vermittelt.

Die Steuerungseinrichtung ist zudem eingerichtet, die Antriebseinrichtung in Abhängigkeit von zumindest einer erfassten Zustandsgröße der ersten Oszillation anzusteuern, um eine Antriebswirkung auf die zweite Oszillation unter Beeinflussung zumindest einer Zustandsgröße der zweiten Oszillation hervorzurufen, so dass die Antriebswirkung einem Unterschreiten eines vorbestimmten Mindestfrequenzabstands zwischen den jeweiligen momentanen Schwingungsfrequenzen der ersten Oszillation und der zweiten Oszillation entgegenwirkt.

Die jeweilige zumindest eine Zustandsgröße einer jeweiligen Oszillation ist durch ihre Amplitude, Frequenz oder Phase oder in Abhängigkeit von zumindest einer dieser Größen bestimmt. Insbesondere kann zumindest eine der erfassten Zustandsgrößen durch die Amplitude der Oszillation bestimmt sein. Dies ist insbesondere dahingehend vorteilhaft, als bei einer nicht-linearen Oszillation die Federsteifigkeit $k(\theta)$ und somit auch die Frequenz $f(\theta)$ bezüglich einer Achse jeweils eine Funktion der Amplitude $\theta$ bezüglich dieser Achse sind, und somit eine Modulation der jeweils anderen Oszillation in Abhängigkeit von der erfassten Amplitude $\theta$ dieser Achse eine unmittelbare, besonders dynamische Sicherstellung des Mindestfrequenzabstands ermöglicht.

Unter einer "Lissajous-Projektion" im Sinne der Erfindung ist insbesondere eine Abtastung (Scanning) eines Beobachtungsfelds mit Hilfe von elektromagnetischer Strahlung zu verstehen, die durch zumindest zwei zueinander orthogonale harmonische Schwingungen (Oszillationen) eines die Strahlung in das Beobachtungsfeld ablenkenden Ablenkelements bewirkt wird.

Unter einer "nichtlinearen Lissajous-Projektion" im Sinne der Erfindung ist als Sonderfall einer Lissajous-Projektion eine Abtastung (Scanning) bzw. Ausleuchtung eines Beobachtungsfelds mit Hilfe von elektromagnetischer Strahlung zu verstehen, die durch zumindest zwei jeweils zueinander orthogonale, nicht strengharmonische, Schwingungen um je eine zugeordnete Schwingungsachse eines die Strahlung in das Beobachtungsfeld ablenkenden Ablenkelements bewirkt wird. Insbesondere kann dabei zumindest eine erste dieser Schwingungen bezüglich einer ersten Schwingungsachse in ihrer Amplitude in Abhängigkeit von der momentanen Amplitude einer Schwingung bezüglich zumindest einer anderen Schwingungsachsen moduliert werden, sodass zumindest die erste Schwingung keine lineare Oszillation darstellt, d.h. nicht dem Hook'schen Gesetz mit amplitudenunabhängiger Federkonstante folgt.

Unter einer "Achse" bzw. gleichbedeutend "Schwingungsachse" im Sinne der Erfindung ist eine Drehachse (Rotationsachse) einer rotatorischen Bewegung zu verstehen. Sie ist eine Gerade, die eine Rotation oder Drehung definiert oder beschreibt.

Unter einer "Antriebseinrichtung" im Sinne der Erfindung ist eine Vorrichtung zu verstehen, die einen oder mehrere Aktuatoren zum Antrieb der Ablenkeinheit, d.h. der simultanen rotatorischen Oszillationen des Ablenkelements relativ zur Tragestruktur und bezüglich zumindest der ersten und der zweiten, sowie gegebenenfalls auch einer dritten Schwingungsachse, aufweist.

Die hierin gegebenenfalls verwendeten Begriffe "umfasst", "beinhaltet", "schließt ein", "weist auf", "hat", "mit", oder jede andere Variante davon sollen eine nicht ausschließliche Einbeziehung abdecken. So ist beispielsweise ein Verfahren oder eine Vorrichtung, die eine Liste von Elementen umfasst oder aufweist, nicht notwendigerweise auf diese Elemente beschränkt, sondern kann andere Elemente einschließen, die nicht ausdrücklich aufgeführt sind oder die einem solchen Verfahren oder einer solchen Vorrichtung inhärent sind.

Ferner bezieht sich "oder", sofern nicht ausdrücklich das Gegenteil angegeben ist, auf ein inklusives oder und nicht auf ein exklusives "oder". Zum Beispiel wird eine Bedingung A oder B durch eine der folgenden Bedingungen erfüllt: A ist wahr (oder vorhanden) und B ist falsch (oder nicht vorhanden), A ist falsch (oder nicht vorhanden) und B ist wahr (oder vorhanden), und sowohl A als auch B sind wahr (oder vorhanden).

Die Begriffe "ein" oder "eine", wie sie hier verwendet werden, sind im Sinne von "ein/eine oder mehrere" definiert. Die Begriffe "ein anderer" und "ein weiterer" sowie jede andere Variante davon sind im Sinne von "zumindest ein Weiterer" zu verstehen.

Der Begriff "Mehrzahl", wie er hier verwendet wird, ist im Sinne von "zwei oder mehr" zu verstehen.

Mithilfe des vorgenannten Mikroscanners lassen sich insbesondere ein oder mehrere der folgenden Vorteile erreichen und somit die oben genannte Aufgabe lösen:
Aufgrund der speziellen Ansteuerung der Antriebseinrichtung bei dem vorgenannten Mikroscanner kann trotz der bestehenden Kopplung zwischen den verschiedenen Oszillationen bzw. Schwingungssachsen erreicht werden, dass die jeweiligen Schwingungsfrequenzen, insbesondere Resonanzfrequenzen, der einzelnen Oszillationen einen Mindestfrequenzabstand voneinander einhalten, sodass es nicht zu einer Frequenzsynchronisation dieser Frequenzen zu verschiedenen Achsen kommt, welche letztlich in ellipsenförmigen Lissajous-Figuren resultieren würde. Dies wiederum ermöglicht insbesondere auch bei Gimballess-Spiegeln eine gleichbleibend flächige, insbesondere auch eine, zumindest im Wesentlichen, rechteckige Ausleuchtung eines Beobachtungsfeldes im Rahmen der Projektion. Unter anderem lässt sich somit bei dem Mikroscanner auch dann, wenn die Resonanzfrequenzen verschiedener Achsen dicht beieinanderliegen, trotz dieses Umstands eine lissajousartige Anregung des Ablenkelements (Spiegel) erzielen, selbst bei vielen Gimballess-Spiegeln, wo dies ohne eine Steuerung der vorgenannten Art nicht möglich wäre.

Da Gimballess-Spiegel bei gleicher Spiegelgröße insgesamt regelmäßig eine kleinere Bauform aufweisen als gimbal-basierte Spiegel, lässt sich bei vergleichbarem Projektionsergebnis auch eine Reduktion des benötigten Bauraums erreichen.

Weil zumindest einer der Oszillatoren (entsprechend der Schwingung um eine bestimmte Schwingungsachse) eine nichtlineare Charakteristik hat, d. h. nicht in seinem gesamten Amplitudenbereich dem Hook'schen Gesetz mit amplitudenunabhängiger Federkonstante entspricht, lässt sich ein, insbesondere gegenüber gimbalbasierten Spiegeln, meist breiterer Durchstimmbereich (Frequenz-Bandbreite), insbesondere mit hoher Güte, erzielen.

Der Mikroscanner eröffnet zudem die Möglichkeit zur Einhaltung definierter Frequenzverhältnisse über weite Temperaturbereiche, da auch temperaturbedingte Schwankungen der Oszillatoreigenschaften im Sinne der Einhaltung des Mindestfrequenzabstands zwischen den Frequenzen der verschiedenen Schwingungssachsen kompensiert werden können. Bei gimballosen Spiegeln treten dabei temperaturbedingte Schwankungen der Oszillatoreigenschaften typischerweise für beide Oszillator-Achsen gleich stark, gleichgerichtet und gleichzeitig auf, im Gegensatz zu kardanisch aufgehängten Spiegeln, bei denen dies typischerweise sequentiell und in unterschiedlicher Ausprägung erfolgt.

Selbst bei stark gekoppelten Achsen und somit ausgeprägt nichtlinearen Mikroscannern kann mit der vorgenannten Steuerung in der Regel ein Aufschwingen in zumindest zwei Dimensionen und mit unterschiedlichen Resonanzfrequenzen für die verschiedenen Achsen ermöglicht werden.

Nachfolgend werden bevorzugte Ausführungsformen des Mikroscanners gemäß dem ersten Aspekt beschrieben, die jeweils, soweit dies nicht ausdrücklich ausgeschlossen wird oder technisch unmöglich ist, beliebig miteinander sowie mit den weiteren beschriebenen anderen Aspekten der Erfindung kombiniert werden können.

Gemäß einigen Ausführungsformen ist die Steuerungseinrichtung des Weiteren eingerichtet, die Antriebseinrichtung zusätzlich in Abhängigkeit von zumindest einer erfassten Zustandsgröße der zweiten Oszillation anzusteuern, um eine Antriebswirkung auf die erste Oszillation unter Beeinflussung zumindest einer Zustandsgröße der ersten Oszillation hervorzurufen, die einem Unterschreiten eines vorbestimmten Mindestfrequenzabstands zwischen den jeweiligen momentanen Schwingungsfrequenzen der ersten Oszillation und der zweiten Oszillation entgegenwirkt. Während die oben beschriebene Grundform des Mikroscanners insbesondere auch einen "Primär-Sekundär"-Betrieb in dem Sinne zulässt, dass nur eine der Oszillationen (Sekundäre Oszillation) in Abhängigkeit von zumindest einer erfassten Zustandsgröße der anderen Oszillation (Primäre Oszillation) beeinflusst wird, können bei den hier genannten Ausführungsformen sowohl die erste als auch die zweite Oszillationen jeweils in Abhängigkeit von zumindest einer erfassten Zustandsgröße der jeweils anderen Oszillation beeinflusst werden, insbesondere auf gleichberechtigte Weise. So lässt sich unter anderem eine höhere Vielfalt an Steuermöglichkeiten realisieren und eine besonders effektive, insbesondere schnelle, automatische dynamische Steuerung der beteiligten Oszillationen unter Vermeidung einer Frequenzsynchronisierung der amplitudenabhängigen Betriebsfrequenzen, insbesondere Resonanzfrequenzen, erreichen.

Gemäß einigen dazu alternativen Ausführungsformen ist die Steuerungseinrichtung dagegen eingerichtet, die Antriebseinrichtung unabhängig von einer Zustandsgröße der zweiten Oszillation anzusteuern, um eine Antriebswirkung auf die erste Oszillation unter Beeinflussung zumindest einer Zustandsgröße der ersten Oszillation hervorzurufen. Diese Ausführungsformen ermöglichen somit insbesondere den vorgenannten "Master-Slave"-Betrieb. Da nur eine der Oszillationen (konkret die zweite Oszillation) in Abhängigkeit von zumindest einer Zustandsgröße der anderen (ersten) Oszillation durch die Steuerungseinrichtung gesteuert werden muss, lässt sich hier eine besonders einfache Realisierung der Steuerungseinrichtung ermöglichen.

Gemäß einigen Ausführungsformen ist die Steuerungseinrichtung eingerichtet, die Ansteuerung der Antriebseinrichtung zum Hervorrufen der jeweiligen Antriebswirkung auf zumindest eine dadurch angetriebene Oszillation im Sinne einer Regelung (engl. "closed loop control") in Abhängigkeit von zumindest einer wiederholt, insbesondere fortlaufend, erfassten Regelgröße vorzunehmen, die eine Zustandsgröße der jeweils anderen Oszillation ist oder in Abhängigkeit davon festgelegt ist. Mit Hilfe einer solchen Regelung lässt sich eine dynamische Ansteuerung der Antriebseinrichtung zum Zwecke der Sicherstellung des Mindestfrequenzabstands besonderes effektiv und optimiert erreichen, wobei insbesondere auch auf unvorhergesehene Störungen reagiert werden kann, die mit einer einfachen Steuerung ohne Rückführung in der Regel nicht in gleichem Maße zu bewerkstelligen wäre. Zudem eröffnet dies die Möglichkeit zur gezielten Kompensation von, insbesondere periodischen, Veränderungen von amplitudenabhängigen Federsteifigkeiten der Federeinrichtung bezüglich zumindest einer Achse, insbesondere von nichtlinearen Kopplungseffekten, die andernfalls Verzerrungen, wie etwa Einschnürungen des durch den Mikroscanner ausgeleuchteten flächigen Bereichs des Beobachtungsfelds bewirken könnten. Andererseits können solche nichtlinearen Kopplungseffekte aber auch verstärkt bzw. gezielt moduliert werden, insbesondere anwendungsabhängig, um besondere Formen des ausgeleuchteten flächigen Bereichs zu erzielen, insbesondere solche, die von einer elliptischen oder rechteckigen Form abweichen. Für Scheinwerferanwendungen kann dies insbesondere zur statischen oder dynamischen Formgebung des von einem auf dem Mikroscanner beruhenden Scheinwerfersystems erzeugten (im Querschnitt flächigen) ausgeleuchteten Bereichs eingesetzt werden. Man denke hier beispielsweise an ein blendfreies Fernlicht für ein Kraftfahrzeug, bei dem der Lichtkegel des Scheinwerfers dynamisch derart geformt wird, dass im Verkehrsraum (zugleich Beobachtungsfeld) blendungsgefährdete Verkehrsteilnehmer automatisch aus der Fernlichtverteilung ausgeblendet werden.

Gemäß einigen Ausführungsformen kann das Erfassen dieser Regelgröße, insbesondere dann wenn die Regelgröße für die Antriebssteuerung der jeweils angetriebenen Oszillation als eine Frequenz oder Phase der jeweils anderen Oszillation oder in Abhängigkeit von zumindest einer dieser Zustandsgrößen festgelegt ist, stets bei einer gleichen Amplitude dieser jeweils anderen Oszillation erfolgen, beispielsweise stets bei einem Nulldurchgang des Amplitudenverlaufs der Oszillation. Auf diese Weise lässt sich eine gegenüber Störungen besonders robuste Regelung erzielen, die aufgrund der stets gleichen Messbedingungen bezüglich der Amplitude, typischerweise geringere Messfehler aufweist.

Gemäß einigen Ausführungsformen kann die Steuerungseinrichtung zudem eingerichtet sein, sowohl die erste Oszillation als auch die zweite Oszillation jeweils im Sinne einer Regelung in Abhängigkeit von zumindest einer wiederholt, insbesondere fortlaufend, erfassten Regelgröße vorzunehmen, die eine Zustandsgröße der jeweils anderen Oszillation ist oder in Abhängigkeit davon festgelegt ist. Dabei sind diese jeweiligen Regelungen für die erste bzw. die zweite Oszillation jeweils dynamisch bezüglich ihrer jeweiligen Steilheit und Regelgeschwindigkeit in Abhängigkeit von der Steilheit und Regelgeschwindigkeit der jeweils anderen Regelung konfigurierbar ausgestaltet. Diese Abstimmung ist insofern vorteilhaft, als damit erreicht werden kann, dass die Achsen in etwa gleich schnell aufschwingen und dadurch die Ursprungsresonanzfrequenzen der Achsen etwa gleich schnell verschoben werden, insbesondere zu höheren Frequenzen hin, wenn die Federsteifigkeit mit zunehmender Amplitude anwächst (englisch: "spring stiffening"). So lässt sich aufgrund des ungefähren Gleichlaufs der Frequenzverschiebungen der Mindestfrequenzabstand für die Differenz zwischen den sich verschiebenden Frequenzen besonders einfach und zuverlässig sicherstellen. Somit kann durch eine solche abgestimmte Konfiguration der Regelkreise insbesondere vermieden werden, dass einer der Regelkreise signifikant schneller regelt als der andere und somit die Gefahr besteht, dass es zu einem unerwünschten Überlapp der Resonanzbereiche, insbesondere Resonanzfrequenzen der Oszillationen kommt, somit der Mindestfrequenzabstand unerwünscht unterschritten wird und in der Folge nur eine linienhafte, insbesondere ellipsenförmige, Lissajous-Projektion anstelle der aufgabengemäß gewünschten flächigen, insbesondere rechtwinkligen, Ausleuchtung auftritt.

Gemäß einigen Ausführungsformen ist die Steuerungseinrichtung eingerichtet, die Ansteuerung der Antriebseinrichtung zum Hervorrufen der jeweiligen Antriebswirkung auf die jeweils dadurch angetriebene Oszillation im Sinne einer rückführungslosen Steuerung in Abhängigkeit von der zumindest einen erfassten Zustandsgröße der jeweils anderen Oszillation vorzunehmen. Hier kann somit eine im Sinne der Steuerungstechnik reine "Steuerung" (engl. "open loop control") der Antriebseinrichtung zum Einsatz kommen. Eine solche Steuerung kann vorteilhaft mit weniger Implementierungsaufwand im Vergleich zu den vorgenannten Regelungen umgesetzt werden. Insbesondere ist es jedoch auch denkbar, eine solche Steuerung mit zumindest einer der vorgenannten Regelungen zu kombinieren. Insbesondere könnte eine Oszillation geregelt und eine andere Oszillation gesteuert sein.

Gemäß einigen dieser steuerungsbasierten Ausführungsformen ist die Steuerungseinrichtung eingerichtet, die Ansteuerung der Antriebseinrichtung zum Hervorrufen der jeweiligen Antriebswirkung auf die jeweils dadurch angetriebene Oszillation so vorzunehmen, dass die Antriebseinrichtung eine jeweils bezüglich der ersten Oszillation und der zweiten Oszillation alternierende schrittweise Erhöhung der jeweiligen Amplitude oder Frequenz dieser Oszillationen bewirkt. Beispielsweise könnte das Aufschwingen des Mikroscanners, genauer seines Ablenkelements, so erfolgen, dass zunächst die Frequenz $f_1$ der ersten Oszillation inkrementiert (d.h. um einen definierten Frequenzschritt erhöht) wird, dann die Frequenz $f_2$ der ersten Oszillation inkrementiert wird, dann wieder $f_1$ weiter inkrementiert wird, dann wieder $f_2$ weiter inkrementiert wird, usw., bis die gewünschten Antriebsfrequenzen erreicht sind. So lässt sich auch unter Verwendung einer bloßen Steuerung ein Aufschwingen des Mikroscanners erreichen, bei dem kein unerwünschter Überlapp der Resonanzbereiche, insbesondere Resonanzfrequenzen der Oszillationen auftritt und somit der Mindestfrequenzabstand gewahrt wird und in der Folge rein ellipsenförmige Lissajous-Projektionen anstelle der aufgabengemäß gewünschten flächigen, insbesondere rechtwinkligen Ausleuchtung vermieden werden können. Die Sequenz der Inkremente kann insbesondere auch in einem Speicher abrufbar hinterlegt sein, und insbesondere auf Basis eines vorausgehenden Kalibriervorgangs bestimmt worden sein. Dies ermöglicht zudem zusätzlich oder anstelle des Kalibrierens eine Konfigurierbarkeit des Aufschwingens durch Festlegung und Speicherung der gewünschten Sequenz der Inkremente.

Gemäß einigen Ausführungsformen ist die Steuerungseinrichtung des Weiteren eingerichtet, die Antriebseinrichtung so anzusteuern (d.h. zu steuern oder zu regeln), dass dabei die jeweilige Frequenz zumindest einer der Oszillationen, insbesondere einer mittels dieser Ansteuerung hauptsächlich angetriebenen Oszillation, in einem vorbestimmten, eine gegenwärtige Resonanzfrequenz dieser Oszillation umgebenden begrenzten Resonanzbereich gehalten wird. Die Resonanzfrequenz ist dabei wie üblich durch die Frequenz $f_R$ gegeben, an der die maximale Amplitude auftritt. Die Grenzen des Resonanzbereichs zu einer Resonanzfrequenz $f_R$ können insbesondere durch die Werte $f_R \pm 70\%$, bevorzugt $f_R \pm 40\%$, weiter bevorzugt $f_R \pm 20\%$, noch weiter bevorzugt $f_R \pm 10\%$ des Frequenzwerts $f_R$ der Resonanzfrequenz bestimmt sein. (Die Prozentzahlen beziehen sich hier jeweils auf den Wert $f_R$). Dies hat insbesondere den Vorteil, dass im Resonanzbereich, insbesondere beim Wert f, maximale Amplituden und somit größtmögliche Ausdehnungen des ausgeleuchteten Bereichs des Beobachtungsfelds erreicht werden können, was insbesondere für großflächige Ausleuchtungen relevant ist.

Gemäß einigen Ausführungsformen ist der Mindestfrequenzabstand als konstante Größe festgelegt. Dies ermöglicht insbesondere eine besonders einfache Implementierung, da wenn diese Größe einmal festgelegt ist, keinerlei Abhängigkeiten zur Bestimmung dieser Größe mehr berücksichtigt werden müssen, insbesondere nicht dynamisch.

Gemäß einigen dazu alternativen Ausführungsformen ist der Mindestfrequenzabstand dagegen als variable Größe festgelegt, die von der jeweiligen aktuellen Amplitude der ersten Oszillation oder der zweiten Oszillation oder von den jeweiligen aktuellen Amplituden dieser beiden Oszillationen abhängt. Auf diese Weise wird eine bessere Anpassungsfähigkeit an verschiedene Systemzustände ermöglicht. Insbesondere kann so ein Aufschwingen des Mikroscanners genauer kontrolliert werden und ein unerwünschtes Überlappen von Resonanzbereichen zu verschiedenen Achsen gerade auch dann effektiv vermieden werden, wenn die Frequenzänderungen dieser Achsen mit zunehmendem Aufschwingen nicht gleichschnell verlaufen.

Gemäß einigen dazu alternativen Ausführungsformen ist die Federeinrichtung so ausgebildet, dass die Stärke der amplitudenabhängigen gegenseitigen Kopplung zwischen der ersten Oszillation und der zweiten Oszillation mit jeweils steigender Amplitude zumindest einer dieser beiden Oszillationen stetig zunimmt. Dies kann insbesondere dadurch erreicht werden, dass die Federeinrichtung insgesamt oder gegebenenfalls deren einzelne Federn so ausgebildet ist bzw. sind, dass ihre bzw. deren jeweilige Federsteifigkeit k mit zunehmender Amplitude anwächst, d.h. wenn

$$k = k(\theta) \text{ mit } k(\theta_a) > k(\theta_b) \text{ für } \theta_a > \theta_b. \qquad (3)$$

Dies wird auch als "spring-stiffening" oder "stress-stiffening" bezeichnet. Damit können insbesondere folgende Vorteile realisiert werden: Über diese gezielt hervorgerufene Versteifung, lässt sich die Frequenz-Bandbreite bzw. die Breite der Resonanz in gewünschter Weise erhöhen. Je ausgeprägter dieser Effekt ist, desto stärker eignet sich ein solcher zweiachsiger Mikroscanner mit beidachsigem "spring-stiffening"-Verhalten für einen ungeregelten und sehr einfach zu implementierenden Open-Loop-Betrieb (reine Steuerung). Zeigt nur eine Oszillation dieses ausgeprägte spring-stiffening und die zweite Oszillation nicht, kann es erforderlich sein, zumindest eine Oszillation mit einer Regelung zu versehen, da die Bandbreite für eine stabile Open-Loop-Ansteuerung dann eventuell nicht ausreicht. Dieser Zustand ist nicht so vorteilhaft wie der Zustand mit zwei ausgeprägt spring-stiffening zeigenden Oszillator-Aufhängungen. Werden die Aufhängungen so entworfen, dass die Oszillation mit der höheren Resonanzfrequenz "spring-stiffening" und die andere "spring-lowering"-Verhalten zeigt, kann sowohl bei reiner Steuerung als auch Regelung oder Kombinationen davon sichergestellt werden, dass die Oszillationen einander nicht annähern und synchronisieren. Ist die Aufhängung des Oszillators mit der niedrigeren Resonanzfrequenz mit "spring stiffening" Verhalten und der mit der höheren Resonanzfrequenz mit "spring lowering" Verhalten ausgelegt, können Amplitudenerhöhungen nur durch Annäherung der Schwingungsfrequenzen erzielt werden. In der Regel wird man diesen Fall vermeiden wollen, da er wenig nutzbare Eigenschaften mit sich bringt. Zeigen beide Oszillatoren "spring lowering"-Verhalten, was design-technisch relativ schwer zu erzielen und damit seltener der Fall ist, kann bei entsprechend starker Ausprägung wiederum eine vorteilhaft einfache Implementierung basierend auf reiner Steuerung erzielt werden, da dann die Frequenzbandbreite der jeweiligen Resonanzen eine ausreichende Stabilität des Zustands erlaubt. Die Steuerung muss erfindungsgemäß weiterhin so ausgestaltet werden, dass der gewünschte Frequenzabstand erhalten bleibt. Dieser Zustand kann dann wieder durch entsprechende Regelkreise stabil gehalten werden.

Gemäß einigen Ausführungsformen ist der Mikroscanner als biaxialer Mikroscanner ausgebildet, bei dem die Ablenkeinheit ein Ablenkelement aufweist, das an einem, als Trägergestell dienenden, es umgebenden Rahmen mittels dreier rotationssymmetrisch angeordneter Federelemente aufgehängt ist. Der Mikroscanner kann dabei insbesondere eine Ablenkeinheit des Typen "Minifaros-Spiegel" aufweisen. Mikroscanner gemäß dieser Ausführungsformen weisen regelmäßig eine sehr starke Kopplung zwischen den Oszillationen der verschiedenen Achsen und daher eine stark nichtlineare Resonanz auf. Dies ermöglicht wiederum große Durchstimmbereiche, d.h. eine große Bandbreite (z.B. ca. 200 Hz bei einigen Minifaros-Spiegelvarianten), innerhalb derer das Ablenkelement in Resonanz schwingen kann (Resonanzbereich).

Gemäß einigen dazu alternativen Ausführungsformen ist der Mikroscanner als biaxialer gimballoser Mikroscanner ausgebildet, bei dem: (i) die Ablenkeinheit ein Ablenkelement aufweist, das an zwei einander gegenüberliegenden Seiten fest eingespannt jeweils mittels einer Biegefeder an einem als Tragegestell dienenden starren Rahmen, insbesondere Chip-Rahmen aus einem Halbleitermaterial, aufgehängt ist; und (ii) die Biegefedern jeweils zwei an ihren Stirnseiten miteinander verbundene und ansonsten beabstandet nebeneinander verlaufende bogenförmige Abschnitte aufweisen, die um das Ablenkelement herum verlaufen, wobei der jeweilige dem Ablenkelement benachbarte Abschnitt jeder Biegefeder mit dem Ablenkelement verbunden ist und der jeweilige dem Rahmen benachbarte Abschnitt jeder Biegefeder mit dem Rahmen verbunden ist. Das Ablenkelement und die Biegefedern, optional auch zusätzlich der Rahmen, können insbesondere einstückig ausgebildet sein, d.h. aus einem einzigen Substrat gefertigt sein. Bei einem solchen Mikroscanner ist die jeweilige Federsteifigkeit bezüglich jeder der Achsen sowohl von der auf sie selbst bezogenen momentanen Amplitude des Ablenkelements als auch von der auf die andere Achse bezogenen momentanen Amplitude des Ablenkelements abhängig. Somit moduliert beim Betrieb des Mikroscanners die erste Oszillation periodisch die zweite Oszillation und umgekehrt. Darüber hinaus tauschen die beiden Oszillationen fortlaufend Schwingungsenergie aus und speichern sie zwischenzeitlich temporär. Mit einem solchen Spiegel lassen sich insbesondere flächenförmige Ausleuchtungen des Beobachtungsfelds erreichen, welche die Form von deformierten, insbesondere eingeschnürten Rechtecken aufweisen, wobei bei entsprechender Ansteuerung der Antriebseinrichtung zur Kompensation der gegenseitigen Modulation auch eine, zumindest näherungsweise, rechteckige flächenförmige Ausleuchtung erreicht werden kann.

Gemäß einigen Ausführungsformen ist die Steuerungseinrichtung eingerichtet, im Rahmen der Ansteuerung der Antriebseinrichtung zum Antrieb der Ablenkeinheit im Sinne einer Amplitudenanpassung, einer Frequenzanpassung oder einer Phasenanpassung zumindest eine entsprechende Zustandsgröße der ersten Oszillation, der zweiten Oszillation oder jeder dieser beiden Oszillationen jeweils individuell auf einen bestimmten Sollwert einzustellen. Insbesondere sind Phasenanpassungen, insbesondere Phasenregelungen, gut geeignet, um eine ansteuerungsbasierte, teilweise oder vollständige Kompensation der gegenseitigen Modulationen der verschiedenen Oszillationen und zudem ein Aufrechterhalten eines resonanten Betriebs des Mikroscanners zu bewirken.

Gemäß einigen Ausführungsformen ist das Ablenkelement mittels der Federeinrichtung gimballos so an der Tragestruktur aufgehängt, dass es relativ zur Tragestruktur simultan zusätzlich eine dritte rotatorische Oszillation bezüglich einer dritten, zu der ersten und zweiten Schwingungsachse jeweils orthogonalen Schwingungsachse ausführen kann, um durch Ablenken eines während der drei simultanen Oszillationen auf das Ablenkelement einfallenden elektromagnetischen Strahls eine nichtlineare Lissajous-Projektion in das Beobachtungsfeld zu bewirken. Dabei ist die Federeinrichtung des Weiteren so ausgebildet, dass sie eine amplitudenabhängige gegenseitige Kopplung zwischen der dritten Oszillation und der ersten Oszillation oder der zweiten Oszillation oder beiden vermittelt. Somit können unter Nutzung der dritten Schwingungsachse bzw. dritten Oszillation insbesondere noch komplexer Projektionsabbildungen vorgenommen werden, bei denen beispielsweise durch entsprechend inhomogene Gestaltung des Reflektionsgrades oder der Struktur der reflektierenden Fläche die Intensität oder Phase der abgelenkten Strahlung durch die Bewegung um die dritte Schwingungsachse (zusätzlich) moduliert sein kann.

Gemäß einigen Ausführungsformen ist die Steuerungseinrichtung des Weiteren eingerichtet, die Antriebseinrichtung in Abhängigkeit von zumindest einer erfassten Zustandsgröße der ersten oder zweiten Oszillation anzusteuern, um eine Antriebswirkung auf die dritte Oszillation unter Beeinflussung zumindest einer Zustandsgröße der dritten Oszillation hervorzurufen, die einem Unterschreiten eines jeweiligen vorbestimmten Mindestfrequenzabstands zwischen den jeweiligen momentanen Schwingungsfrequenzen der ersten bzw. zweiten Oszillationen einerseits und der dritten Oszillation andererseits entgegenwirkt. Somit kann die Frequenzentkopplung der verschiedenen Achsen auch auf die dritte Achse erweitert werden und somit durch eine solche Kopplung andernfalls auftretende unerwünschte Abbildungsstörungen bei der Projektion kompensiert bzw. vermieden werden.

Bei einigen Ausführungsformen weist der Mikroscanner des Weiteren eine Verkapselung auf, mittels der zumindest das Ablenkelement und die Federeinrichtung hermetisch abgeschlossen so eingekapselt sind, dass das Ablenkelement in der Verkapselung zur Ausführung der Oszillationen befähigt an der Federeinrichtung schwingfähig aufgehängt ist. Dabei weist die Verkapselung einen das Ablenkelement überbrückenden Kapselabschnitt auf, durch den die abzulenkende Strahlung in den von der Verkapselung eingekapselten Raumbereich eingestrahlt und nach ihrer Ablenkung am Ablenkelement daraus wieder ausgestrahlt werden kann. Die Verkapselung bzw. der Kapselabschnitt kann insbesondere aus einem Glasmaterial bestehen oder ein solches enthalten, welches in einem für den Einsatz des Mikroscanners relevanten Spektralbereich für elektromagnetische Strahlung zumindest überwiegend, bevorzugt weitgehend, transparent ist.

Die Verwendung einer solchen Verkapselung ermöglicht es insbesondere, den Druck in dem hermetisch abgeschlossenen eingekapselten Raumbereich zu reduzieren, insbesondere diesen Raumbereich zu evakuieren, um so Gasreibungsverluste, insbesondere Luftreibungsverluste, oder andere Störungen der Oszillationen des Ablenkelements zu verringern oder sogar weitgehend auszuschließen. Besonders vorteilhaft ist dies im Falle der Verwendung des Mikroscanners für Lissajous-Display-Anwendungen, wenn das Ablenkelement und seine Federaufhängung nicht an Umgebungsluft, sondern bei reduziertem Druck, insbesondere im Vakuum, betrieben werden, weil dadurch auf sehr effiziente Weise die Reibungsverluste durch die Luftdämpfung umgangen werden können und der Mikroscanner in Folge dessen beispielsweise bis 100 mal größere Schwingungsamplituden erreichen kann als an Luft unter Atmosphärendruck. Entsprechend kann damit auch die erreichbare optische Auflösung entsprechend, beispielsweise auf das bis zu 100-fache, in einer oder jeder der ersten und zweiten Schwingungsachsen gesteigert werden.

Bei einigen dieser Ausführungsformen weist der Kapselabschnitt eine domförmige (kuppelförmige), eine planare oder eine im Querschnitt rechtwinklig U-förmige Gestalt auf. Die domförmige Gestalt hat insbesondere den Vorteil, dass einfallende und ausfallende elektromagnetische Strahlen, insbesondere Laserstrahlen, durch die Verkabelung kaum abgelenkt werden. Soweit einfallende Strahlen an dem domförmigen Kapselabschnitt reflektiert werden, erfolgt dies regelmäßig in eine andere Richtung als die Richtung des am Ablenkelement reflektierten ausfallenden Strahls, sodass hier unerwünschte Wechselwirkungen bzw. Überlagerungen der Strahlen effektiv vermieden werden können. Die planare Gestalt und die im Querschnitt rechtwinklig U-förmige Gestalt zeichnen sich dagegen jeweils durch ihre besonders einfache Herstellbarkeit und Handhabung bei der Fertigung des Mikroscanners aus. Die im Querschnitt rechtwinklig U-förmige Gestalt kann zusätzlich den Vorteil bieten, dass etwaige andernfalls zusätzlich erforderliche Zwischenschichten (Spacerschichten) im Unterbau der Verkapselung für die Ausbildung eines für die Bewegung des Ablenkelements ausreichend großen, von der Verkapselung eingeschlossenen Raumbereichs vermieden oder in ihrer Anzahl oder Dicke reduziert werden können.

Ein zweiter Aspekt der Erfindung betrifft ein Projektionssystem zum Projizieren von Lissajous-Figuren auf ein Beobachtungsfeld, wobei das Projektionssystem einen Mikroscanner nach dem ersten Aspekt der Erfindung, insbesondere gemäß einer der hierin beschriebenen Ausführungsformen und Varianten davon, aufweist.

Das Projektionssystem kann gemäß einiger Ausführungsformen insbesondere eine Strahlungsquelle zur Erzeugung des von dem Mikroscanner abzulenkenden (und somit "einfallenden") elektromagnetischen Strahls aufweisen.

Die Steuerungseinrichtung kann gemäß einiger Ausführungsformen des Weiteren eingerichtet sein, die Strahlungsquelle mit zumindest einem Modulationssignal zu versorgen, in Abhängigkeit von dem der einfallende elektromagnetische Strahl moduliert wird. Die Modulation kann insbesondere seinen zeitlichen oder örtlichen Intensitätsverlauf betreffen. Je nach Typ der Strahlungsquelle sind jedoch auch andere Modulationsarten denkbar, insbesondere Modulationen der Wellenlänge (z.B. Farbe) oder Wellenlängenverteilung der von der Strahlungsquelle emittierten Strahlung. Bei der Projektion von Bildern, erfolgt die Modulation entsprechend in Abhängigkeit von der momentanen Ablenkrichtung so dass entsprechende Bildpunkte auf der Projektionsfläche mit dem zugehörigen Pixelwert des korrespondierenden Bildpunkts des darzustellenden Bildes per Modulation erzeugt werden.

Die in Bezug auf den ersten Aspekt der Erfindung erläuterten Merkmale und Vorteile gelten entsprechend auch für das vorgenannte Projektionssystem nach dem zweiten Aspekt der Erfindung.

Weitere Vorteile, Merkmale und Anwendungsmöglichkeiten der vorliegenden Erfindung ergeben sich aus der nachfolgenden detaillierten Beschreibung im Zusammenhang mit den Figuren.

Dabei zeigt:

**Fig. 1** schematisch einen beispielhaften Aufbau eines Mikroscanners gemäß einiger Ausführungsformen der Erfindung;

**Fig. 2** schematisch einen beispielhaften Aufbau eines Projektionssystems zum Projizieren von Lissajous-Figuren auf ein Beobachtungsfeld gemäß einigen Ausführungsformen der Erfindung;

**Fig.** 3 schematisch eine Aufsicht auf eine Ablenkeinheit mit einem gimballosen Minifaros-Spiegel, die insbesondere in dem Mikroscanner aus Fig. 1 verwendbar ist;

**Fig.** 4 einen beispielhaften Frequenzgang des gimballosen Minifaros-Spiegels aus Fig. 3;

**Fig.** 5 schematisch eine Aufsicht auf eine Ablenkeinheit einer beispielhaften weiteren gimballosen Spiegelvariante ("KOLA") unter Verwendung von bogenförmigen Biegefedern als Federeinrichtung, die insbesondere in dem Mikroscanner aus Fig. 1 verwendbar ist;

**Fig. 6** eine beispielhafte Aufnahme des Querschnitts eines nicht-kompensierten, gegenüber einem Rechteck eingeschnürten und deformierten flächenförmigen Ausleuchtungsbereich bei einem Mikroscanner mit einer Ablenkeinheit gemäß Fig. 5;

**Fig. 7** eine Frequenzgangdarstellung zur Illustration eines Beispiels für das Einhalten eines erforderlichen Mindestfrequenzabstands während des Aufschwingens eines erfindungsgemäßen Mikroscanners, um zu vermeiden, dass mit dem Zunehmen der Amplitude eine Selbst-Synchronisation stattfindet und es dadurch zur starren Phasenund Frequenz-Kopplung kommt;

**Fig.** 8(A) ein Blockschaltbild einer beispielhaften kombinierten Steuerung/Regelung (Open-loop für eine Achse, Closed-loop für eine andere Achse) des Mikroscanners aus Fig. 1, gemäß einigen Ausführungsformen der Erfindung;

Fig. 8(B) zeigt einen beispielhaften Frequenzverlauf für die beiden Oszillationen beim Aufschwingen des Mikroscanners aus Fig. 8(A);

Fig. 9 ein Blockschaltbild einer beispielhaften doppelten Regelung (Closed-loop für beide Achsen) des Mikroscanners aus Fig. 1 gemäß einer Ausführungsform der Erfindung, wobei jedoch eine signalbasierte Rückkopplung zwischen den beiden Regelungen nur unidirektional erfolgt; und

Fig. 10 ein Blockschaltbild einer beispielhaften doppelten Regelung (Closed-loop für beide Achsen) des Mikroscanners aus Fig. 1 gemäß einer Ausführungsform der Erfindung, wobei eine signalbasierte bidirektionale Rückkopplung zwischen den beiden Regelungen vorliegt.

In den Figuren werden durchgängig dieselben Bezugszeichen für dieselben oder einander entsprechende Elemente der Erfindung verwendet.

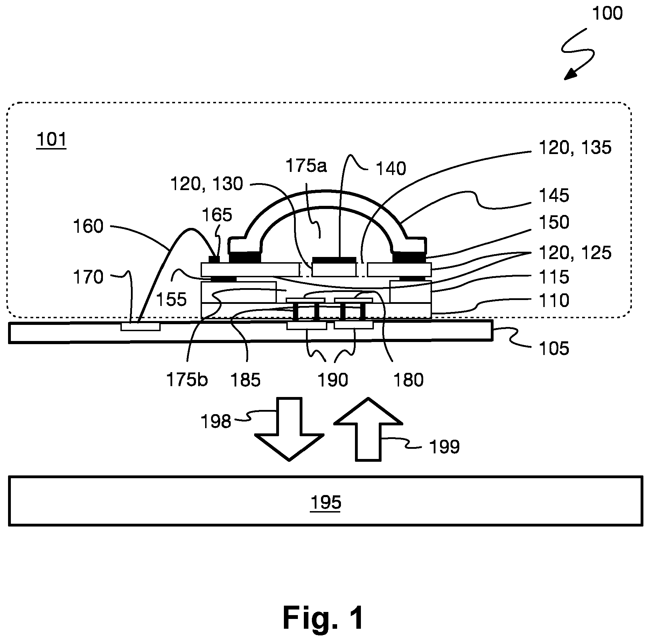

Fig. 1 illustriert in einer seitlichen Querschnittsansicht schematisch eine beispielhafte Ausführungsform 100 eines Mikroscanners gemäß einer beispielhaften Ausführungsform der Erfindung mit einer Antriebseinrichtung 105 für den Antrieb des Mikroscanners 100.

Die Mikroscanner 100 weist als Antriebseinrichtung einen Piezoaktuator 105 auf, der zugleich eine Grundplatte bildet, auf welcher ein stapelförmiger, mehrschichtiger Aufbau aus verschiedenen übereinandergestapelten Substraten angeordnet ist, der insgesamt eine Ablenkeinheit 101 des Mikroscanners bildet. Den Kern dieses mehrschichtigen Aufbaus bildet ein erstes Substrat 120 (Chip) aus einem Halbleitermaterial, das in verschiedene, zusammenhängende Teilbereiche strukturiert ist. Zu diesen Teilbereichen gehören ein Rahmenteilbereich 125, ein als Ablenkelement dienender Spiegelteilbereich ("Spiegel") 130 sowie mehrere den Spiegelteilbereich 130 jeweils mit dem Rahmenteilbereich verbindende und als Verbindungsstege ausgebildete Federelemente 135.

Der Spiegelteilbereich 130 ist über die Federelemente 135, welche sich verwinden können, beweglich in dem Rahmenteilbereich 125 gelagert, und zwar so, dass der Spiegelteilbereich 130 relativ zum Rahmenteilbereich 125 eine zweidimensionale, insbesondere biaxiale, Schwingungsbewegung ausführen kann. Die Verbindungsstege 135 stellen somit eine Federaufhängung des Spiegelteilbereichs 130 dar. Die Verbindungsstege bzw. Federelemente 135 bilden insgesamt eine Federeinrichtung der Ablenkeinheit 101. Diese Federeinrichtung ist dabei so ausgebildet, dass sie eine amplitudenabhängige gegenseitige Kopplung zwischen den Oszillationen zu den einzelnen Schwingungsachsen vermittelt. Es ergibt sich so eine nicht-lineare Federcharakteristik der Federeinrichtung als Ganzes.

Der Spiegelteilbereich 130 ist auf einer seiner Hauptflächen mit einer metallischen Beschichtung 140 so versehen, dass diese metallische Schicht 140 eine verspiegelte Reflexionsfläche zur Ablenkung einfallender elektromagnetische Strahlung, insbesondere eines Laserstrahls z.B. im sichtbaren oder infraroten Bereich des elektromagnetischen Spektrums, bildet. Der Spiegelteilbereich 130 mit seiner Beschichtung 140 bildet somit ein Ablenkelement der Ablenkeinheit 101.

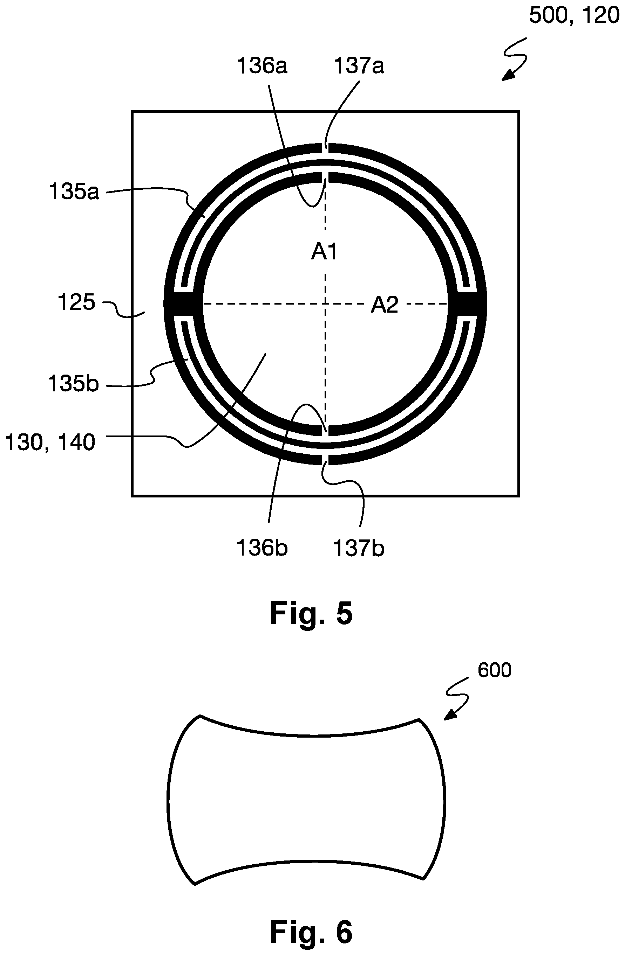

Die Metallschicht 140 kann insbesondere einen oder mehrere der folgenden Werkstoffe enthalten: Al, Ti/Au, Ti/Pt/Au, Ta/Pt/Au, Cr/Au, Ta/Au, Ti/Ag, Ta/Ag, Ta/Pt/Ag, Ti/Pt/Ag, Ti/TiW/Au,Ti/W/Au, Ti/W/Ag, Ti/TiW/Ag, etc.. Insbesondere können zusätzliche dielektrische Schichten oberhalb oder auch unterhalb der Metallschichten Verwendung finden, um die Qualität der Schichten zu verbessern oder um die Metallschichten vor Korrosion zu schützen. In anderen Fällen kann die Spiegelschicht ganz und gar aus dielektrischen Schichtstapeln ausgebildet sein, um auf diese Weise besonders hohe Reflektivitäten für einen bestimmten Wellenlängenbereich zu erzielen. Die vorgenannten Werkstoffe können sowohl eine hohe Langzeithaltbarkeit als auch gute Spiegeleigenschaften aufweisen. Die Form der verspiegelten Reflexionsfläche 140 kann insbesondere wie in Fig. 3 und 5 jeweils gezeigt, kreisrund sein, ohne dass dies jedoch als Einschränkung zu verstehen wäre. Insbesondere sind auch rechteckige oder andere mehreckige Formen denkbar. Im Weiteren wird unter Bezugnahme auf die Figuren 3 und 5 auf verschiedene beispielhafte Implementierungen solcher Ablenkelemente bzw. insbesondere von ersten Substraten 120 noch im Einzelnen eingegangen werden.

Die Ablenkeinheit 101 enthält des Weiteren optional ein zweites Substrat 145 aus einem Glaswerkstoff. Das zweite Glassubstrat weist eine Kuppelform auf und ist mittels eines Substratbondmaterials 150, z. B. eines Glass-Frit-Materials, hermetisch mit dem Rahmenteilbereich 125 des ersten Substrats 120 verbunden, um über diesem einen ersten (in Fig. 1 "oberen") Teilbereich 175a eines den Spiegelteilbereich 130 beidseitig umgebenden Hohlraums 175 auszubilden.

Auf der dem zweiten Substrat 145 gegenüberliegenden Seite des ersten Substrats 120 befinden sich in dem mehrschichtigen Aufbau 101 ein als Bodenplatte dienendes drittes Substrat 110 sowie zwischen dem ersten Substrat und dem dritten Substrat ein weiteres, viertes Substrat 115, welches als Abstandshalter beziehungsweise (gleichbedeutend) Spacerschicht ausgebildet ist. Das dritte und das vierte Substrat können jeweils insbesondere aus einem Halbleitermaterial gefertigt sein.

Das vierte Substrat 115 ist so strukturiert, dass es eine Kavität aufweist, die unterhalb des Spiegelteilbereichs 130 so angeordnet ist, dass sie zusammen mit ihrer durch die Bodenplatte 110 gegebenen bodenseitigen Begrenzung einen zweiten (in Fig. 1 (a) "unteren") Teilbereich 175b des Hohlraums 175 ausbildet.

Die jeweils benachbarten einzelnen Substrate sind untereinander hermetisch dicht verbunden, beispielsweise wiederum mittels eines Substratbondmaterials 150 bzw.155, sodass der Hohlraum 175 bei Verwendung des zweiten Substrats 145 insgesamt hermetisch dicht ausgebildet ist. Er ist vorzugsweise evakuiert, sodass in ihm ein, vorzugsweise deutlich, unter Normalbedingungen (101,325 kPa = 1013,25 mbar) liegender Restgasdruck herrscht, der bevorzugt unterhalb von 10 kPa / $10^{+1}$ kPa ($10^{-1}$ mbar), besonders bevorzugt bei $10^{-1}$ kPa ($10^{-3}$ mbar) liegt. Typischerweise weisen die ersten bis vierten Substrate 110, 115, 120, 145 jeweils eine selbe Grundform, insbesondere eine rechtwinklige Form auf, wenngleich andere Formen ebenso möglich sind.

Der Piezoaktuator 105 ist dazu konfiguriert, bei seiner elektrischen Ansteuerung Vibrationsbewegung zu erzeugen und auf die Ablenkeinheit 101 und insbesondere auf deren Spiegelteilbereich 130 zu übertragen. In einer Variante hierzu ist die Vibrationsbewegung multidimensional, so dass gleichzeitig mehrere Oszillationen zu verschiedenen orthogonalen Schwingungsachsen angeregt werden können, wenn die Vibrationsfrequenz(en) in den Resonanzbereich der jeweiligen Oszillation kommen. Alternativ dazu kann de die Antriebseinrichtung, insbesondere in diesem Beispiel der Piezoaktuator 105 auch so konfiguriert sein, dass jede der Oszillationen über eine entsprechende besondere Bewegungskomponente, insbesondere eine Verkippung des Aktuators um eine parallel zur entsprechenden Schwingungsachse verlaufenden Achse gezielt separat anregbar ist.

Auf diese und andere Weisen kann der Spiegelteilbereich 130 mit seiner Spiegelfläche 140 zur Ausführung einer Schwingungsbewegung, insbesondere einer resonanten oder erzwungenen mehrdimensionalen Schwingungsbewegung wie etwa einer bi-axialen Lissajous-Bewegung relativ zum Rahmenteilbereich 125 angeregt werden. Die einachsigen Schwingungskomponenten um je eine entsprechende der Schwingungsachsen bzw. werden im Folgenden jeweils als Oszillation bezeichnet. Bei diesen Oszillationen kann sich der Spiegelteilbereich 130 durch Verkippung (Rotation) um die jeweilige Schwingungsachse, aus der Ebene des ersten Substrats 120 heraus bewegen und dabei beidseitig in die Teilbereiche 175a und 175b des Hohlraums 175 eintauchen. Aufgrund der Evakuierung des Hohlraums 175 ist die verbleibende Reibung im Gas sehr gering, so dass dadurch nur eine geringe, insbesondere eine vernachlässigbar geringe, Dämpfung auftritt.

Des Weiteren weist die Mikroscanner 100 eine kapazitive Lagebestimmungseinrichtung auf. Zu der Lagebestimmungseinrichtung gehören zwei Elektroden, zwischen denen zum Zwecke der Bestimmung der jeweiligen aktuellen Amplitudenlage, insbesondere Orientierung, des Spiegelteilbereichs 130 eine elektrische Kapazitätsmessung erfolgt. Eine erste der beiden Elektroden wird durch die metallische Spiegelfläche 140 gebildet, die somit dazu vorgesehen ist, eine Doppelfunktion (Ablenken einfallender elektromagnetischer Strahlung; Elektrode) auszuführen. Die zweite der beiden Elektroden ist auf der Innenseite der Bodenplatte 110 im Hohlraumbereich 175 als eine entsprechende metallische Beschichtung 180 der Bodenplatte 110 ausgeführt. Im vorliegenden Beispiel ist diese Bodenelektrode 180 als mehrteilig strukturierte Metallschicht ausgebildet. Die Form dieser Bodenelektrode 180 entspricht in ihrer Art und vorzugsweise zumindest näherungsweise auch der Größe nach im Wesentlichen der im nichtausgelenkten Ruhezustand des Spiegelteilbereichs 130 parallel dazu liegenden Form des Spiegelteilbereichs 130, beziehungsweise von dessen Reflexionsschicht bzw. Spiegelfläche 140.

Die Bodenelektrode 180 ist über ein oder mehrere sogenannte Vias, also mit elektrisch gut leitendem (Leit-

fähigkeit >$10^6$ S/m), in der Regel metallischem, Material gefüllte Verbindungstunnel, die sich von der Bodenelektrode 180 durch die Bodenplatte 110 hindurch bis zu entsprechenden Anschlusspads 190 auf dem Piezoaktuator 105 erstrecken, elektrisch kontaktiert. Die Spiegelelektrode 140 wiederum ist über eine Umverdrahtungslage elektrisch mit einem auf dem ersten Substrat 120 außerhalb der durch das zweite (Glas-)substrat gebildeten Kuppel angeordneten Anschlusspad 165 elektrisch verbunden und von dort aus mittels eines Bonddrahts 160 mit einem weiteren Anschlusspad 170 auf dem Piezoaktuator 105 elektrisch verbunden. So ist die Spiegelelektrode 140 insgesamt über das Anschlusspad 170 elektrisch kontaktiert. Folglich kann eine zur Lagebestimmung des Spiegelteilbereichs 130 eingesetzte elektrische Kapazitätsmessung zwischen den Anschlusspads 190 und 170 erfolgen.

Der Mikroscanner 100 weist des Weiteren eine Steuerungseinrichtung 195 auf, die insbesondere dazu eingerichtet ist, den Piezoaktuator 105 zum Antrieb der Ablenkeinheit so mittels entsprechender elektrischer Ansteuersignale 198 anzusteuern (im Sinne von Steuern oder Regeln), dass dabei eine jeweilige, insbesondere resonante, Antriebswirkung bezüglich zumindest einer der Oszillationen des Ablenkelements 130, 140 individuell einstellbar ist. Speziell ist die Steuerungseinrichtung dazu konfiguriert, insbesondere programmiert, den Piezoaktuator 105 in Abhängigkeit von zumindest einer erfassten Zustandsgröße einer Oszillation gemäß einer ersten Schwingungsachse $A_1$ ("erste Oszilla-tion") anzusteuern, um eine Antriebswirkung auf die Oszillation zur zweiten, zur ersten orthogonalen, Schwingungsachse $A_2$ ("zweite Oszillation") unter Beeinflussung zumindest einer Zustandsgröße der zweiten Oszillation hervorzurufen, die einem Unterschreiten eines vorbestimmten Mindestfrequenzabstands $f_{TH}$ zwischen einer momentanen Schwingungsfrequenz $f_{1,i}$ der ersten Oszillation und einer momentanen Schwingungsfrequenz $f_{2,i}$ der zweiten Oszillation entgegenwirkt. Zudem ist die Steuerungseinrichtung 195 eingerichtet, von der Ablenkeinheit auf Basis der vorgenannten elektrischen Kapazitätsmessung Messsignale 199, insbesondere Messsignale, die eine momentane Lage der Ablenk-einheit bezüglich der Achsen $A_1$ und $A_2$ angeben, zu empfangen. Als Zustandsgrößen kommen hier jeweils insbesondere die Amplitude, die Frequenz und die Phase der jeweiligen Oszillationen infrage.

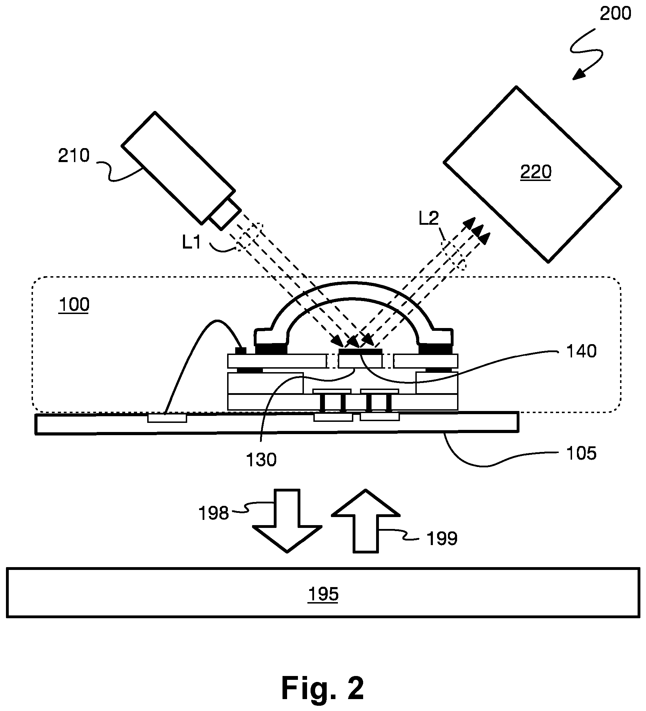

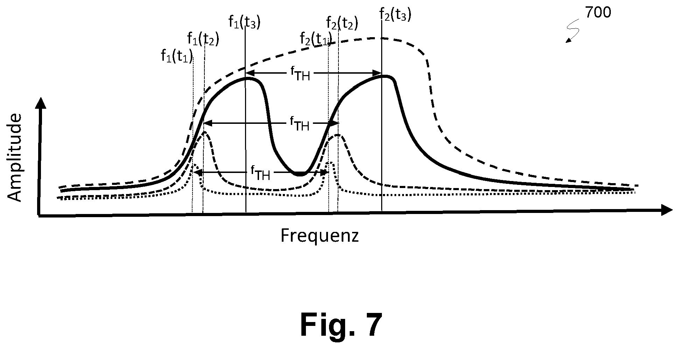

Optional kann die Steuerungseinrichtung 195 auch eingerichtet sein, zusätzlich in umgekehrter Richtung eine Steuerung vorzunehmen, d. h. den Piezoaktuator 105 in Abhängigkeit von zumindest einer erfassten Zustandsgröße der zweiten Oszillation anzusteuern, um eine Antriebswirkung auf die erste Oszillation unter Beeinflussung zumindest einer Zustandsgröße der ersten Oszillation hervorzurufen, die einem Unterschreiten des vorbestimmten Mindestfrequenzabstands zwischen einer momentanen Schwingungsfrequenz $f_{1,i}$ der ersten Oszillation und der momentanen Schwingungsfrequenz $f_{2,i}$ der zweiten Oszillation entgegenwirkt. Einzelheiten von in diesem Zusammenhang mittels der Steuerungseinrichtung 195 durchführbaren Steuerungen und Regelungen der Oszillationen werden im Weitern insbesondere unter Bezugnahme auf die Figuren 7 bis 10 erläutert werden. **Fig.** 2 zeigt schematisch einen beispielhaften Aufbau eines Projektionssystems 200 zum Projizieren von Lissajous-Figuren auf ein Beobachtungsfeld 220. hierzu kann insbesondere der Mikroscanner 100 aus Fig. 1 zum Einsatz kommen. Auf dessen verspiegelter Oberfläche 140, die als Reflexionsfläche dient, wird mittels eines als Quelle elektromagnetischer Strahlung, insbesondere von sichtbarem Licht, dienenden Lasers 210 ein Strahlenbündel L1 einfallenden Lichts erzeugt und auf die Reflexionsfläche 140 gerichtet, um dort reflektiert und als abgelenktes Strahlenbündel L2 auf das Beobachtungsfeld 220 abgebildet zu werden, um dieses zumindest abschnittsweise auszuleuchten. Das Beobachtungsfeld kann durch eine Projektionsfläche, etwa durch eine glatte Oberfläche wie zum Beispiel eine Leinwand oder einen Fußboden oder Straßenbelag definiert sein. Zusätzlich zu dem in Fig. 2 dargestellten einfachsten Fall einer reinen Reflexion, können neben dem Ablenkelement bzw. Spiegel 130/140 noch ein oder mehrere weitere optische Elemente zur Festlegung der Abbildung vorgesehen sein, insbesondere in Form von Spiegeln oder optischen Linsen.

**Fig.** 3 zeigt schematisch eine Aufsicht auf eine Ablenkeinheit 300 mit einem gimballosen Minifaros-Spiegel, die insbesondere in dem Mikroscanner 100 aus Fig. 1 bzw. in dem Projektionssystem 200 aus Fig. 2 eingesetzt werden kann. **Fig.** 4 zeigt einen zugehörigen Frequenzgang der Amplitude des Ablenkelements bei Anregung bezüglich einer Schwingungsachse hierzu.

Bei dieser Ausführungsform kann der Mikroscanner insbesondere als biaxialer Mikroscanner 300 ausgebildet sein. Seine Ablenkeinheit 101 weist hier ein als Spiegelplatte ausgebildetes Ablenkelement 130, 140 auf. Es ist an einem es umgebenden, als Tragestruktur dienenden Rahmenabschnitts 125 des Substrats 120 mittels dreier rotationssymmetrisch angeordneter Federelemente 135 aufgehängt, die zusammen eine Federeinrichtung bilden. Die Aufhängung ist dabei so konfiguriert, dass damit das Ablenkelement 130, 140 (Spiegel) gimballos so gefedert an dem Rahmenabschnitt 125 aufgehängt ist, dass es relativ dazu simultan eine erste rotatorische Oszillation bezüglich einer ersten Schwing-ungsachse $A_1$ und eine zweite rotatorische Oszillation um eine dazu orthogonale zweite Schwingungsachse $A_2$ ausführen kann, um durch Ablenken eines während der simultanen Oszillationen auf das Ablenkelement einfallenden elektromagnetischen Strahls L1 eine nichtlineare Lissajous-Projektion in das Beobachtungsfeld 220 zu bewirken. Dieser Verlauf der beiden zueinander orthogonalen Schwingungsachsen $A_1$ und $A_2$ ist hier aufgrund der Rotationssymmetrie bezüglich der drei Aufhängungen, die entlang des Spiegelumfangs jeweils 120 Grad voneinander entfernt liegen, von dem Verlauf der Anregung abhängig.

Die Oszillationen um die beiden Achsen $A_1$ und $A_2$ sind hier aufgrund der speziellen Konfiguration der Federeinrichtung stark gekoppelt, so dass sie nicht mehr unabhängig sind. Tatsächlich gilt in diesem Fall abweichend vom harmonischen Oszillator, dass die effektiven Federsteifigkeiten $k_1$ bzw. $k_2$ jeweils zeitabhängige Funktionen der mechanischen Ist-Amplituden (Auslenkungen) $\theta_{1,i}(t)$ und $\theta_{2,i}(t)$ bezüglich der beiden Schwingungsachsen $A_1$ bzw. $A_2$ sind:

$$k_1 = k_1(\theta_{1,i}(t),\theta_{2,i}(t)) \text{ und } k_2 = k_2(\theta_{1,i}(t),\theta_{2,i}(t)). \qquad (3)$$

Beim Minifaros-Spiegeltyp sieht man die Kopplung bzw. Wechselwirkung zwischen den beiden Oszillationen in der Regel sehr eindeutig. Beide Schwingungsachsen werden durch alle drei Federn 135 definiert. Das bedeutet, dass alle drei Federn 135 auch an beiden Achsen $A_1$ und $A_2$ beteiligt sind, anders als beim kardanisch aufgebauten Spiegel. Bei letzterem hat jede Schwingungs-Achse ein eigenes Paar von Torsionsaufhängungen.

Treibt man herkömmlich, d.h. ohne Einsatz der besonderen erfindungsgemäßen Steuerung, den MiniFaros-Spiegel durch innere oder auch äußere Kräfte an, dann beginnt er zunächst in einer Achse $A_1$ oder $A_2$ linear zu schwingen. Wenn man dann die Frequenz f erhöht und sich der Resonanzfrequenz der zweiten Achse nähert, dann wandert immer mehr Schwingungsenergie von in die zweite der ersten Oszillation um die Achse $A_1$ zu der zweiten Oszillation um die Achse $A_2$ und der Spiegel 130/140 schwingt nicht mehr nur linear sondern elliptisch. Diese Ellipse wird vom Durchmesser immer größer und gleichzeitig nimmt die Ellipse immer mehr Kreisform an. Das bedeutet, dass zugeführte Schwingungsenergie durch die starke Wechselwirkung beider Achsen immer mehr von einer in die andere Achse übertragen wird.

Dabei synchronisiert sich die zweite Achse hinsichtlich der Phasenlage also selbst, denn es liegt dann keine Schwingung mit beliebiger Phasenbeziehung zwischen den Achsen vor, sondern eine Ellipse oder ein Kreis, was gleichbedeutend mit einer synchronisierten Phasenlage der beiden Achsen $A_1$ und $A_2$ ist, obwohl die Energie nur über eine Achse zugeführt wurde.

Ein interessantes und wichtiges Merkmal der stark wechselwirkenden Achsen sind die nichtlinear arbeitenden Federaufhängungen 135. Diese haben eine ausgeprägt nichtlineare Resonanz zur Folge - im Fall von MiniFaros Spiegeln handelt es sich um sogenanntes "Stress-Stiffening" oder "Spring-Stiffening" mit einer "geneigten Zipfelmütze" zu höheren Frequenzen hin, wie das in **Fig. 4** als Frequenzgänge der Schwingungsamplitude z.B. zur Achse $A_1$ dargestellt ist.

Die Federsteifigkeiten $k_1$ und $k_2$ gemäß der vorgenannten Gleichung (3) nehmen hier sowohl als Funktion der ersten Amplitude $\theta_1$ als auch der zweiten Amplitude $\theta_2$ mit zunehmender jeweiliger Amplitude zu. Dies hat zur Folge, dass man den Mikroscanner 100 hier also nur von niedrigeren zu höheren Frequenzen hin in Resonanz fahren kann, um so die am Resonanzpunkt auftretende maximale Amplitude zu erzielen. Darüber hinaus muss man von der niedrigeren der beiden Resonanzfrequenzen beginnen, um überhaupt die Oszillationen zu beiden Achsen $A_1$ und $A_2$ anregen zu können. Beginnt man bei der höheren der beiden Resonanzfrequenzen, dann bleibt die Schwingung einachsig.

**Fig. 4** zeigt dazu eine Schar entsprechender Frequenzgänge zu drei verschiedenen Ansteuerspannungen in Höhe von 40 V, 80 V bzw. 120 V, für die Antriebsvorrichtung 105, wobei eine höhere Ansteuerspannung zu einer größeren Maximalamplitude bei ansonsten gleicher Betriebsart korrespondiert. Deutlich ist zu erkennen, dass sich beim Aufschwingen mit ansteigendem Frequenzverlauf ("auf") die angesprochenen zipfelförmigen Amplitudenverläufe mit nur einem ausgeprägten Maximum ergeben, was auf die synchronisierten Achsen ($f_{1,i} \approx f_{2,i}$ bzw. $f_{1R} \approx f_{2R} \approx f_R$) schließen lässt.

Statt eines nahezu senkrechten schmalen Resonanz-Peaks zeigt sich hier beim Aufschwingen mit zunehmender Schwingungsamplitude eine deutliche Verbreiterung der Resonanzkurve zu höheren Frequenzen hin. Je größer die Schwingungsamplitude, desto stärker versteift sich die Aufhängung, d.h. erhöht sich die Federsteifigkeit k, und desto stärker verändert sich die Resonanzfrequenz $f_R$. Dies führt zu einer Verbreiterung der Bandbreite (Frequenz-Durchstimmbereich).

Würde man stattdessen das Aufschwingen mit abnehmender Anregungsfrequenz vornehmen ("ab"), ergäben sich jedoch deutlich unterschiedliche Frequenzgänge mit separaten und geringer ausgeprägten Maxima zu den dann separaten bleibenden Resonanzfrequenzen $f_{1R}$ und $f_{2R}$ der beiden Achsen $A_1$ bzw. $A_2$.

Nichtlineare 2D-Mikroscanner ohne Kardan-Aufhängung weisen praktisch immer eine sehr starke Kopplung auf. Die stark nichtlineare Resonanz hat einen großen Durchstimmbereich zur Folge - also eine große Bandbreite, innerhalb welcher der Mikroscanner in Resonanz schwingen kann. Beim MiniFaros-Spiegel können das je nach Ausführung beispielsweise 200 Hz sein, was gegenüber der für Hoch-Güte-Gimbalscanner typischen Bandbreite von unter 1 Hz sehr hoch ist.

Es handelt sich bei diesen nichtlinearen koppelnden 2D-Spiegeln nicht mehr um eine Kombination zweier harmonischer Oszillatoren, denn es liegt gemäß Gleichung (3) keine linear mit der Amplitude ansteigende Federkraft basierend auf einer "Feder-Konstanten" mehr vor, also kein harmonisches Verhalten. Vielmehr es handelt sich um eine stark nichtlinear von der Amplitude abhängige Federkraft, die als sogenannter "Duffing-Oszillator" beschrieben werden kann.

Hinzuweisen ist darauf, dass der Minifaros Spiegel trotz einer möglichen Kreisbahn/Ellipsenform der resultierenden Lissajous-Abbildung in Wirklichkeit in der Regel nicht identische, sondern zwei verschiedene Resonanzfrequenzen aufweist, die im Grundzustand (niedrige Schwingungs-Amplitude) etwa 100 Hz auseinander liegen können. Durch das Aufschwingen der Achse mit der niedrigeren Resonanzfrequenz verstimmt sich jedoch der Oszillator so sehr zu höheren Frequenzen hin, dass die beiden Achsen in ihren Frequenzen einander immer mehr angleichen, bis sie schließlich überlappen ($f_{1R} \approx f_{2R}$) und den Energieaustausch vollständig ermöglichen. Somit ist die Ablenkeinheit 300 für ein flächiges Ausleuchten eines Beobachtungsfeldes mittels Lissajous-Projektion jenseits der Abbildung von ellipsenförmigen, insbesondere kreisförmigen, Linien anstelle einer gewünschten flächenhaften Ausleuchtung eigentlich nicht ohne Weiteres geeignet.

Wird dagegen eine erfindungsgemäße Steuerungseinrichtung zur Steuerung der Antriebseinrichtung des Mikroscanners 100 eingesetzt, so wird eine flächenhafte, insbesondere auch zumindest annähernd rechteckige Ausleuchtung mittels Durchstimmen der Amplitude möglich. Auch beim Aufschwingen mit zunehmender Frequenz können die Frequenzmaxima zu den beiden Oszillationen bzw. Achsen dann aufrechterhalten werden, da diese Frequenzen bezüglich ihres Frequenzabstands stets so eingestellt werden, dass sie einen vorbestimmten Mindestfrequenzabstand $f_{TH}$ nicht unterschreiten können und sich somit von einer Ellipsenform abweichende Ausleuchtungen ergeben.

**Fig. 5** zeigt schematisch eine Aufsicht auf eine Ablenkeinheit 500 mit einem gimballosen Spiegel (hier als Typ "KOLA" bezeichnet) gemäß einer anderen Ausführungsform der Ablenkeinheit 101, insbesondere des Substrats 120. Auch diese Ausführungsform kann wiederum insbesondere in dem Mikroscanner 100 aus Fig. 1 bzw. in dem Projektionssystem 200 aus Fig. 2 eingesetzt werden.

Der KOLA-Mikroscanner ist ein biaxialer gimballoser Mikroscanner, bei dem die Ablenkeinheit 500 ein Ablenkelement (Spiegel) 130,140 aufweist, das an zwei einander gegenüberliegenden Seiten jeweils mittels einer fest eingespannten Biegefeder 135a, 135b an einem als Tragegestell dienenden (starren) Rahmenabschnitt 125, insbesondere eines Chips, aufgehängt ist. Die Biegefedern 135a, 135b weisen jeweils zwei an ihren Stirnseiten miteinander verbundene und ansonsten beabstandet nebeneinander verlaufende bogenförmige Abschnitte auf, die um das Ablenkelement 130, 140 herum verlaufen. Der jeweilige dem Ablenkelement 130, 140 benachbarte Abschnitt jeder Biegefeder ist dabei mittels eines inneren Verbindungsstegs 136a bzw. 136b mit dem Ablenkelement 130, 140 verbunden. Der jeweilige dem Rahmenabschnitt 125 benachbarte Abschnitt jeder Biegefeder 135a, 135b ist mittels eines äußeren Verbindungsstegs 137a bzw. 137b mit dem Rahmenabschnitt 125 verbunden.

Die Biegefedern 135a, 135b können in ihrer Länge insbesondere so ausgebildet sein, dass sie möglichst lang und breit ausgelegt entlang der äußeren Kontur des Ablenkelements verlaufen und zwar bevorzugt einmal von der Schwingungsdrehachse $A_1$ aus gesehen senkrecht entfernend (annähernd ein Viertelkreis zu jeder Seite) und dann wieder zu dieser Achse $A_1$ zurückkehrend. Dieser Verlauf der Biegefedern erlaubt es dem Ablenkelement 130, 140, beweglich in beiden zueinander orthogonalen Schwingungsachsen $A_1$ und $A_2$ zu sein, deren jeweiliges Lager durch die Struktur der Federeinrichtung mit der beschriebenen Aufhängung festgelegt ist.

Die beiden Achsen bzw. die zugeordneten Oszillationen zeigen eine starke Kopplung und somit eine ausgeprägte Wechselwirkung, wenn die Schwingungsamplituden sehr groß sind. Insbesondere führt jede Amplitude des Ablenkelements 130, 140 um die erste Achse $A_1$ sofort zu einer Versteifung der gesamten Biegefeder 135a bzw. 125b, die aber beide Schwingungsachsen $A_1$ und $A_2$ beeinflusst. Dadurch wird die relevante Federkonstante bzw. amplitudenabhängige Federfunktion $k_1$ nicht nur für die Schwingung der ersten Achse $A_1$ periodisch verstimmt, sondern gleichzeitig auch die relevante Federfunktion $k_2$ für die dazu senkrechte zweite Achse $A_2$, und umgekehrt. Somit gilt, dass beide Federfunktionen zeitabhängige Funktionen gemäß Gleichung (3) sind.

Diese periodische Versteifung hat eine periodische Verschiebung der jeweiligen Resonanzfrequenzen $f_{1R}$ bzw. $f_{2R}$ der beiden Oszillationen zu den Achsen $A_1$ bzw. $A_2$ zur Folge. Das bedeutet: Die Schwingung der ersten Achse $A_1$ verstimmt periodisch die Resonanzfrequenz $f_{2R}$ der zweiten Achse $A_2$ und die Schwingung zweiten Achse $A_2$ verstimmt umgekehrt periodisch die Resonanzfrequenz $f_{1R}$ der ersten Achse $A_1$. Darüber hinaus gilt auch, dass die beiden Achsen $A_1$ und $A_2$ permanent Schwingungs-Energie übertragen, untereinander austauschen und speichern.

Dies resultiert beim KOLA-Mikroscanner in modulierten Spiegelschwingungsamplituden $\theta_1(t)$ und $\theta_2(t)$. Das bei der Projektion dabei entstehende Scan-Muster im Beobachtungsfeld 220 hat daher, wenn keine erfindungsgemäße Steuerung zum Einsatz kommt, im Querschnitt keine vollständig rechteckige Gestalt, sondern zeigt eine deutliche Einschnürung besonders in der einen Achse. Dies ist schematisch in Fig. 6 illustriert.

Wird dagegen eine erfindungsgemäße Steuerungseinrichtung zur Steuerung der Antriebseinrichtung des Mikroscanners 100 eingesetzt, so wird eine flächenhafte, insbesondere auch zumindest annähernd rechteckige Ausleuchtung mittels Durchstimmens der Amplitude möglich. Auch können dann beim Aufschwingen mit zunehmender Frequenz die Frequenzmaxima zu den beiden Oszillationen bzw. Achsen aufrechterhalten werden, da diese Frequenzen bezüglich ihres Frequenzabstands $f_{1,i}$ - $f_{2,i}$ (oder $|f_{1,i} - f_{2,i}|$ stets so eingestellt werden, dass sie einen vorbestimmten Mindestfrequenzabstand $f_{TH}$ nicht unterschreiten.

Fig. 7 zeigt eine Frequenzgangdarstellung zur Illustration eines Beispiels für das Einhalten eines erforderlichen Mindestfrequenzabstands während des Aufschwingens eines erfindungsgemäßen Mikroscanners, um zu vermeiden, dass mit dem Zunehmen der Amplitude eine Selbst-Synchronisation stattfindet und es dadurch zur starren Phasen- und Frequenz-Kopplung kommt.

Dabei zeigen die drei unteren Kurvenverläufe den Ist-Frequenzgang der Amplitude der Schwingung des Ablenkelements (bezüglich einer beliebigen der beiden Achsen) zu verschiedenen aufeinanderfolgenden Zeitpunkten $t_1$, $t_2$ und $t_3$ des Aufschwingvorgangs an. Die gestrichelt dargestellte oberste Kurve in Fig. 7 stellt den Zustand dar, wenn die Amplitude des Oszillators mit der niedrigeren Resonanzfrequenz so weit aufgeschwungen ist, dass die Resonanz der einen Achse die der anderen Achse (mit der höheren Resonanzfrequenz) überlagert. In diesem Zustand versucht der erste Oszillator den zweiten zu synchronisieren. Unterbinden kann man dieses "Zusammenwachsen" nur, wenn die beiden Resonatoren ihre Separation dadurch aufrecht halten, dass beide gleichzeitig aufschwingen und dadurch gleichgerichtet stress-stiffening zeigen. Mit $f_1$ (Abkürzung für $f_{1R}$) ist hier die jeweils momentane (amplitudenabhängige) Resonanzfrequenz zur ersten Schwingungsachse $A_1$ und mit $f_2$ (Abkürzung für $f_{2R}$) entsprechend die jeweils momentane (amplitudenabhängige) Resonanzfrequenz zur zweiten Schwingungsachse $A_2$ bezeichnet. Bei Verwendung eines erfindungsgemäßen Mikroscanners treten zwar zum einen aufgrund der verwendeten gimballosen Ablenkeinheit starke Kopplungen zwischen den verschiedenen Oszillationen bzw. zugehörigen Schwingungsachsen $A_1$ und $A_2$ auf. Zum anderen wird jedoch durch die Steuerungseinheit 195 aktiv einer Synchronisation dieser Oszillationen bzw. Kurzschwingungsachsen entgegengewirkt, um einen Mindestfrequenzabstand $f_{TH}$ aufrechtzuerhalten und somit ein Zusammenlaufen der beiden Resonanzfrequenzen $f_1$ und $f_2$ (bzw. $f_{1R}$ und $f_{2R}$) zu verhindern. Folglich stellen die resultierenden Lissajous-Figuren auch nicht bloße Ellipsen dar, wie dies bei $f_1 = f_2$ (bzw. $f_{1R} = f_{2R}$) der Fall wäre, sondern können bei geeigneter Wahl der Anregung durch die Antriebseinheit 105 andersartig geformte, flächige, insbesondere sogar rechtwinklige Ausleuchtungsbereiche im Beobachtungsfeld 220 bewirken.

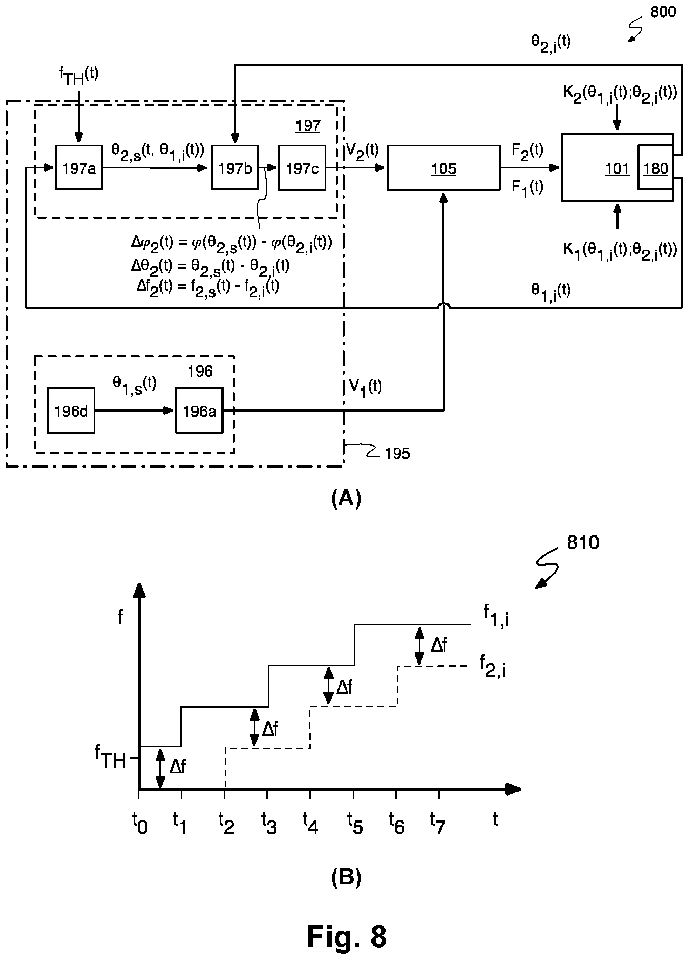

**Fig. 8(A)** zeigt ein Blockschaltbild einer beispielhaften Ausführungsform 800 des Mikroscanners aus Fig. 1 mit kombinierter Steuerung/Regelung (Open-loop für eine Achse, Closed-loop für eine andere Achse).

Die Steuerungseinrichtung 195 weist hier zum einen eine Steuerungseinheit 196 (open-loop) für die erste Oszillation bezüglich der ersten Achse $A_1$ sowie eine Regelungseinheit 197 (closed-loop) für die zweite Oszillation bezüglich der zweiten Achse $A_2$ auf. Die Steuerung 196 liefert ein erstes Ansteuersignal in Form einer zeitabhängigen Spannung $V_1(t)$ zur Steuerung des Piezoaktuators 105 im Hinblick auf die erste Oszillation. Die Regelung 197 liefert dagegen ein zweites Ansteuersignal (genauer ein Regelgrößensignal) in Form einer zeitabhängigen Spannung $V_2(t)$ zur Regelung des Piezoaktuators 105 im Hinblick auf die zweite Oszillation. Die beiden Spannungen $V_1(t)$ und $V_2(t)$ entsprechend den Steuersignalen bzw. Regelgrößensignalen 199 aus Fig. 1 bzw. Fig. 2. Aufgrund dieser Ansteuerung führt der Piezoaktuator 105 auf die erste und zweite Schwingungssachse $A_1$ und $A_2$ wirkende Bewegungen durch und übt dabei aufgrund seiner mechanischen Kopplung an die Ablenkeinheit 101 entsprechende mechanische Kräfte $F_1(t)$ bzw. $F_2(t)$ aus, um die erste Oszillation und die zweite Oszillationen jeweils anzutreiben, insbesondere jeweils resonant, d.h. entsprechend ihrer jeweiligen momentanen Resonanzfrequenz $f_{1R}$ bzw. $f_{2R}$. Da die Ablenkeinheit 101 vom gimballosen Typ ist, bestehen zwischen beiden Schwingungssachsen $A_1$ und $A_2$ nicht-vernachlässigbare, jeweils von den Ist-Amplituden $\theta_{1,i}(t)$ und $\theta_{2,i}(t)$ abhängige und somit auch zeitabhängige mechanische Kopplungen $K_1(\theta_{1,i}(t); \theta_{2,i}(t))$ auf die erste Oszillation bzw. $K_2(\theta_{1,i}(t); \theta_{2,i}(t))$ auf die zweite Oszillation.

Die Steuerungseinheit 196 weist einen Steuerungscontroller 196a für die erste Oszillation auf, der auf eine Lookup-Tabelle 196d zugreifen kann, in der Steuerungsdaten abgelegt sind, die einen zeitlichen Sollwertverlauf $\theta_{1,s}(t)$ der Amplitude der ersten Oszillation beim Aufschwingen des Mikroscanners 800 repräsentieren. Entsprechend den Steuerungsdaten erzeugt der Steuerungscontroller 196a die zeitabhängige Spannung $V_1(t)$ zur Steuerung des Piezoaktuators 105 im Hinblick auf die erste Oszillation und gibt diese an den Piezoaktuator 105 zu dessen Ansteuerung aus.

Während es sich bei der vorgenannte Steuerung der ersten Oszillation um eine rückführungsfreie (open loop) Steuerung handelt, weist die Regelung für die zweite Oszillation eine Rückführungsschleife (closed-loop) auf, mit der eine mittels der Bodenelektrode 180 der Ablenkeinheit 101 erfasste, durch die momentanen Ist-Amplituden $\theta_{1,i}(t)$ und $\theta_{2,i}(t)$ gegebene, momentane Lage des Ablenkelements (Spiegels) 130,140 an die Regeleinheit 197 als ein Eingangssignal zurückgeführt wird. Die rückgeführte Amplitude $\theta_{1,i}(t)$ wird dabei einem Steuerungscontroller 197a der Regelungseinheit 197 zugeführt, der unter Berücksichtigung des, optional zeitabhängigen, Mindestfrequenzabstands $f_{TH}$ einen Sollwert $\theta_{2,s}(t)$ für die Amplitude der zweiten Oszillation bestimmt. Da die Amplitude mit der Frequenz der zweiten Oszillation, wie in Fig. 7 beispielhaft dargestellt, in gegenseitiger Abhängigkeit steht, wird somit auch ein Sollwert für die momentane Frequenz der zweiten Oszillation festgelegt.

Der Sollwert $\theta_{2,s}(t)$ wird einem Differenzdetektor 197b für die zweite Oszillation zugeführt, der insbesondere eingerichtet sein kann, eine Phasendifferenz $\Delta\varphi_2(t)$ zwischen dem Sollwert $\theta_{2,s}(t)$ und dem rückgeführten Istwert $\theta_{2,i}(t)$ der Amplitude der zweiten Oszillation zu detektieren, und über einen nachgeschalteten Regler beziehungsweise Schleifenfilter ein im Sinne einer Phasensynchronisierung bestimmtes Regelgrößensignal $V_2(t)$ zu erzeugen und an den Piezoaktuator 105 auszugeben. Stattdessen oder zusätzlich können auf analoge Weise auch eine Amplitudenregelung oder eine direkte Frequenzregelung vorgesehen sein.

**Fig. 8(B)** zeigt einen beispielhaften Frequenzverlauf für die beiden Oszillationen beim Aufschwingen des Mikroscanners aus Fig. 8(A). Wenn gemäß diesem Beispiel die gesteuerte erste Oszillation so verläuft, dass ihre Ist-Frequenz $f_{1,i}$ den mittels der durchgezogenen Kennlinie dargestellten stufenförmigen Verlauf nimmt, kann die Regelung für die zweite Oszillation so gestaltet sein, dass sie den mittels der gestrichelten Kennlinie dargestellten stufenförmigen Verlauf nimmt, bei dem stets der Mindestfrequenzabstand $f_{TH}$ eingehalten wird. Das Aufschwingen des Mikroscanners erfolgt hier somit zeitlich alternierend bezüglich der beiden Oszillationen. So kann unter Nutzung der Regelung für die zweite Oszillation, die über die Kopplung $K_2(\theta_{1,i}(t); \theta_{2,i}(t))$ in Abhängigkeit von der ersten Oszillation steht, ein biaxiales Aufschwingen unter Wahrung des Mindestfrequenzabstands $f_{TH}$ erreicht werden.

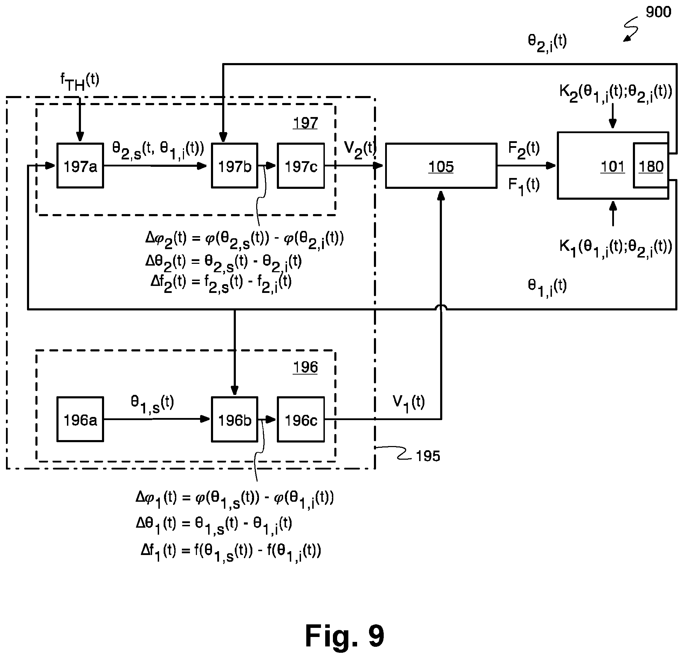

**Fig. 9** zeigt ein Blockschaltbild einer beispielhaften doppelten Regelung (Closed-loop für beide Achsen) des Mikroscanners aus Fig. 1 gemäß einer weiteren Ausführungsform 900 der Erfindung, wobei jedoch eine signalbasierte Rückkopplung zwischen den beiden Regelungen nur unidirektional erfolgt.

Der Mikroscanner 900 geht aus dem Mikroscanner 800 aus Fig. 8 (A) hervor, indem nun anstelle der Steuerung für die erste Oszillation auch dort eine Regelung, insbesondere eine Phasenregelung, vorgesehen ist. Dementsprechend ist die Steuerungseinheit durch eine Regelungseinheit 196 ersetzt und die Ist-Amplitude $\theta_{1,i}$ (t) der ersten Oszillation wird ebenfalls am Ablenkelement gemessen und an die Regelungseinheit 196 zurückgeführt, um auch für die erste Oszillation eine Regelschleife zu schließen.

Im Ergebnis liegt nun für jede der beiden Oszillationen eine eigene Regelung vor, wobei die Regelung für die erste Oszillation als Master-Regelung fungiert, in dem Sinne, dass sie nicht auf die Regelung der zweiten Oszillation Rücksicht nimmt und dementsprechend auch keine rückgeführte Ist-Amplitude $\theta_{2,i}$ (t) der zweiten Oszillation erhält. Die Regelung zur zweiten Oszillation wirkt demgegenüber als Slave-Regelung, deren Sollwertbestimmung von der rückgeführten Ist-Amplitude $\theta_{1,i}$(t) der ersten Oszillation sowie dem als weitere Eingangsgröße dienenden Mindestfrequenzabstand $f_{TH}$ abhängt. Die Sicherstellung der Einhaltung des Mindestfrequenzabstands hängt somit von der Regelung zur zweiten Oszillation ab, während jede der beiden Regelungen zusätzlich dafür sorgt, dass die jeweiligen Antriebssignale $V_1$(t) und $V_2$(t) jeweils in Phase zum Ist-Verlauf ihrer jeweiligen Oszillation wirken und somit einen entsprechenden Resonanzbetrieb der Ablenkeinheit 101 unterstützen.

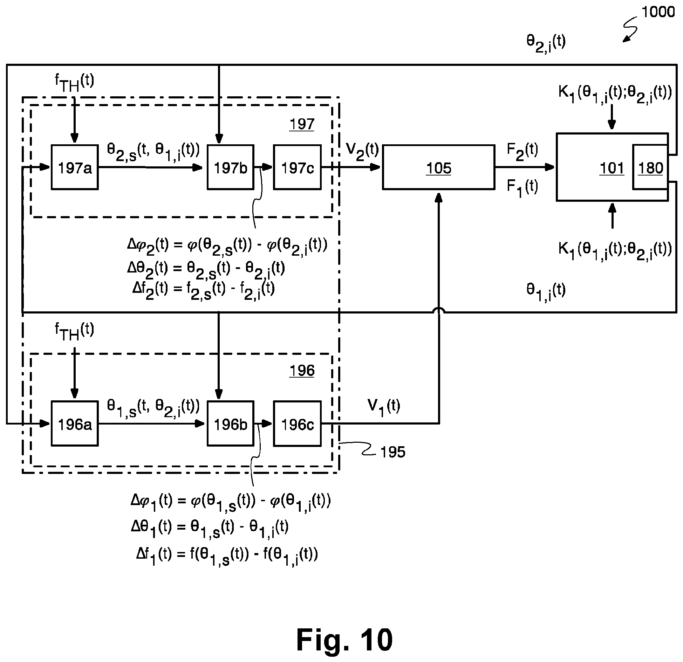

**Fig. 10** zeigt ein Blockschaltbild einer beispielhaften doppelten Regelung (Closed-loop für beide Achsen) des Mikroscanners aus Fig. 1 gemäß einer noch weiteren Ausführungsform 1000 der Erfindung, wobei eine bidirektionale Signalkopplung der Regelungen vorliegt.

Der Mikroscanner 1000 geht aus dem Mikroscanner 900 aus Fig. 9 hervor, indem nun die Regelung für die erste Oszillation zusätzlich eine Rückführung der Ist-Amplitude $\theta_{2,i}$ (t) der zweiten Oszillation sowie den Mindestfrequenzabstand $f_{TH}$ als Eingangssignale erhält. Es ergibt sich somit ein symmetrischer Aufbau bei dem die Regelung für die erste Oszillation durch die zweite Oszillation beeinflusst wird, und umgekehrt. Die Sicherstellung der Einhaltung des Mindestfrequenzabstands hängt somit von den jeweiligen Regelungen beider Oszillationen ab, während jede der beiden Regelungen zusätzlich dafür sorgt, dass die jeweiligen Antriebssignale $V_1$(t) und $V_2$(t) jeweils in Phase zum Ist-Verlauf ihrer jeweiligen Oszillation wirken und somit einen entsprechenden Resonanzbetrieb der Ablenkeinheit 101 unterstützen.

Dabei sind diese jeweiligen Regelungen für die erste bzw. die zweite Oszillation jeweils dynamisch bezüglich ihrer jeweiligen Steilheit und Regelgeschwindigkeit in Abhängigkeit von der Steilheit und Regelgeschwindigkeit der jeweils anderen Regelung konfiguriert bzw. konfigurierbar ausgestaltet. Diese Abstimmung ist insofern vorteilhaft, als damit erreicht werden kann, dass die Achsen in etwa gleich schnell aufschwingen und dadurch die Ursprungsresonanzfrequenzen der Achsen etwa gleich schnell verschoben werden, insbesondere zu höheren Frequenzen hin, wenn die Federsteifigkeit mit zunehmender Amplitude anwächst.

Um von vorneherein die Gefahr für das Auftreten von Regelinstabilitäten zu reduzieren oder idealerweise ganz zu bannen, kann in den Regelkreisen insbesondere die maximale Geschwindigkeit, mit der sich Frequenzen oder auch Amplituden ändern können, begrenzt sein, eventuell auch im Rahmen einer aus einem Kalibriervorgang resultierenden Kalibrierung. Da die Frequenzen in der Regel sehr hoch liegen, z.B. bei einigen Kilohertz, kann zu diesem Zweck auch ein sehr kontrolliertes sicheres Vorgehen innerhalb sehr kurzer Zeiträume stattfinden.

Während vorausgehend wenigstens eine beispielhafte Ausführungsform beschrieben wurde, ist zu bemerken, dass eine große Anzahl von Variationen dazu existiert. Es ist dabei auch zu beachten, dass die beschriebenen beispielhaften Ausführungsformen nur nichtlimitierende Beispiele darstellen, und es nicht beabsichtigt ist, dadurch den Umfang, die Anwendbarkeit oder die Konfiguration der hier beschriebenen Vorrichtungen und Verfahren zu beschränken. Vielmehr wird die vorausgehende Beschreibung dem Fachmann eine Anleitung zur Implementierung mindestens einer beispielhaften Ausführungsform liefern, wobei sich versteht, dass verschiedene Änderungen in der Funktionsweise und der Anordnung der in einer beispielhaften Ausführungsform beschriebenen Elemente vorgenommen werden können, ohne dass dabei von dem in den angehängten Ansprüchen jeweils festgelegten Gegenstand abgewichen wird.

BEZUGSZEICHENLISTE

| | |
|---|---|
| 100 | Mikroscanner |
| 101 | Ablenkeinheit |
| 105 | Antriebseinrichtung, insbesondere Piezoaktuator |
| 110 | drittes Substrat, Bodenplatte |
| 115 | viertes Substrat, Spacerschicht |

| | |
|---|---|
| 120 | erstes Substrat |
| 125 | Rahmenteilbereich |
| 130 | Spiegelteilbereich |
| 135 | Federelement |
| 135a,b | Biegefedern |
| 136a,b | innere Verbindungsstege |
| 137a,b | äußere Verbindungsstege |
| 140 | metallische Spiegelbeschichtung, Spiegelelektrode |
| 145 | zweites Substrat, kuppelförmig |
| 150 | Substratbondmaterial |
| 155 | weiteres Substratbondmaterial |
| 160 | Bonddraht |
| 165 | Anschlusspad auf erstem Substrat 120 zum Anschluss der oberen Elektrode (Top-Elektrode) 140 |
| 170 | Anschlusspad auf Piezoaktuator 105 zum Anschluss der oberen Elektrode 140 |
| 175a | oberer Bereich des Hohlraums 175 |
| 175b | unterer Bereich des Hohlraums 175 |
| 180 | strukturierte, ggf. mehrteilige Bodenelektrode |
| 185 | Vias mit Lot-Bumps zur Kontaktierung des Piezoaktuators |
| 190 | Anschlusspads auf Piezoaktuator 105 zum Anschluss der Bodenelektrode |
| 195 | Steuerungseinrichtung |
| 196 | Steuerungseinheit oder Regelungseinheit für erste Oszillation |
| 196a | Steuerungscontroller für erste Oszillation |
| 196b | Differenzdetektor für erste Oszillation |
| 196c | Regler bzw. Schleifenfilter (im Phasenregelkreis) für erste Oszillation |
| 196d | Look-up-Tabelle |
| 197 | Regelungseinheit für zweite Oszillation |
| 197a | Steuerungscontroller für zweite Oszillation |
| 197b | Differenzdetektor für für zweite Oszillation |
| 197c | Regler bzw. Schleifenfilter (im Phasenregelkreis) für zweite Oszillation |
| 198 | Messsignale für Rückführung(en) in Regelkreis(en) und Positionsmessung |
| 199 | Steuersignale bzw. Regelgrößensignale |
| 200 | Projektionssystem |
| 210 | Lichtquelle, insbesondere Laser |
| 220 | Beobachtungsfeld, insbesondere Projektionsfläche |
| 300 | Ablenkeinheit mit einem gimballosen Minifaros-Spiegel |
| 400 | Frequenzgang des gimballosen Minifaros-Spiegels |
| 500 | Ablenkeinheit mit einem gimballosen KOLA-Spiegel |
| 600 | eingeschnürter und deformierter flächenförmigen Ausleuchtungsbereich |
| 700 | Frequenzgang |
| 800 | Blockschaltbild einer gemischten Steuerung (open-loop) /Regelung (closed-loop) |
| 900 | Blockschaltbild einer unidirektional gekoppelten zweiachsigen Steuerung (closed-loop) |
| 1000 | Blockschaltbild einer bidirektional gekoppelten Regelung (closed-loop) |
| $A_1$ | erste Schwingungsachse |
| $A_2$ | zweite Schwingungsachse |
| $F_1, F_2$ | achsenspezifische Antriebskräfte von Antriebseinrichtung auf Ablenkelement |
| $K_1(...)$ | mechanische Achsenkopplung auf die erste Achse |
| $K_2(...)$ | mechanische Achsenkopplung auf die zweite Achse |
| $L_1$ | einfallendes Lichtstrahlenbündel |
| $L_2$ | am Spiegel reflektiertes Lichtstrahlenbündel |
| $V_1, V_2$ | Steuerspannungen zur Ansteuerung der Antriebseinrichtung |
| f | Frequenz |
| $f_1$ | Soll-Frequenz der ersten Oszillation |
| $f_2$ | Soll-Frequenz der zweiten Oszillation |
| $\Delta f$ | Frequenzdifferenz |
| $f_{TH}$ | Mindestfrequenzabstand |
| $\theta_{1,i}$ | Ist-Amplitude der ersten Oszillation zur ersten Schwingungsachse $A_1$ |
| $\theta_{1,s}$ | Soll- Amplitude der ersten Oszillation zur ersten Schwingungsachse $A_1$ |
| $\theta_{2,i}$ | Ist- Amplitude der zweiten Oszillation zur ersten Schwingungsachse $A_2$ |

$\theta_{2,s}$      Soll- Amplitude der zweiten Oszillation zur ersten Schwingungsachse $A_2$
$\Delta\theta$      Amplitudendifferenz
$\varphi$      Phase
$\Delta\varphi$      Phasendifferenz
t      Zeit

**Patentansprüche**

1. Mikroscanner (100) für ein Projektionssystem (200) zum Projizieren von Lissajous-Figuren auf ein Beobachtungsfeld, wobei der Mikroscanner (100) aufweist:

Eine Ablenkeinheit (101) mit einem Ablenkelement (130,140) zum Ablenken eines einfallenden elektromagneti-schen Strahls ($L_1$), einer Tragestruktur (125) und einer Federeinrichtung (135;135a,b), wobei das Ablenkelement (130,140) mittels der Federeinrichtung (135; 135a,b) gimballos so an der Tragestruktur (125) aufgehängt ist, dass es relativ zur Tragestruktur (125) simultan eine erste rotatorische Oszillation um eine erste Schwingung-sachse ($A_1$) sowie eine zweite rotatorische Oszillation um eine dazu orthogonale zweite Schwingungsachse ($A_2$) ausführen kann, um durch Ablenken eines während der simultanen Oszillationen auf das Ablenkelement (130,140) einfallenden elektromagnetischen Strahls ($L_1$) eine nichtlineare Lissajous-Projektion in ein Beobachtungsfeld (220) zu bewirken; und

eine Steuerungseinrichtung (195), die konfiguriert ist, eine Antriebseinrichtung (105) zum Antrieb der Ablenkeinheit (101) so anzusteuern, dass dabei eine jeweilige Antriebswirkung ($F_1$; $F_2$) bezüglich zumindest einer der Oszillationen des Ablenkelements (130, 140) individuell einstellbar ist;
wobei die Federeinrichtung (135; 135a,b) des Weiteren so ausgebildet ist, dass sie eine amplitudenabhängige gegenseitige Kopplung ($K_1$; $K_2$) zwischen den Oszillationen vermittelt;
**gekennzeichnet dadurch, dass** die Steuerungseinrichtung (195) eingerichtet ist, die Antriebseinrichtung (105) in Abhängigkeit von zumindest einer erfassten Zustandsgröße ($0_{1,i}$, $f_{1,i}$, $\varphi_{1,i}$) der ersten Oszillation anzusteuern, um eine Antriebswirkung ($F_2$) auf die zweite Oszillation unter Beeinflussung zumindest einer Zustandsgröße ($\theta_{2,i}$, $f_{2,i}$, $\varphi_{2,i}$) der zweiten Oszillation hervorzurufen, sodass die Antriebswirkung ($F_2$) einem Unterschreiten eines vorbestimmten Mindestfrequenzabstands ($f_{TH}$) zwischen den jeweiligen momentanen Schwingungsfrequenzen ($f_{1,i}$, $f_{2,i}$) der ersten Oszillation und der zweiten Oszillation entgegenwirkt;
wobei die jeweilige zumindest eine Zustandsgröße einer jeweiligen Oszillation durch ihre Amplitude ($\theta_{1,i}$ ;$\theta_{2,i}$), Frequenz ($f_{1,i}$, $f_{2,i}$) oder Phase ($\varphi_{1,i}$, $\varphi_{2,i}$) oder in Abhängigkeit von zumindest einer dieser Größen bestimmt ist.

2. Mikroscanner (100) nach Anspruch 1, wobei die Steuerungseinrichtung (195) des Weiteren eingerichtet ist, die Antriebseinrichtung (105) zusätzlich in Abhängigkeit von zumindest einer erfassten Zustandsgröße ($\theta_{2,i}$, $f_{2,i}$, $\varphi_{2,i}$) der zweiten Oszillation anzusteuern, um eine Antriebswirkung ($F_1$) auf die erste Oszillation unter Beeinflussung zumin-dest einer Zustandsgröße ($\theta_{1,i}$, $f_{1,i}$ ,$\varphi_{1,i}$) der ersten Oszillation hervorzurufen, die einem Unterschreiten eines vorbestimmten Mindestfrequenzabstands ($f_{TH}$) zwischen den jeweiligen momentanen Schwingungsfrequenzen ($f_{1,i}$, $f_{2,i}$) der ersten Oszillation und der zweiten Oszillation entgegenwirkt.

3. Mikroscanner (100) nach Anspruch 1, wobei die Steuerungseinrichtung (195) eingerichtet ist, die Antriebseinrichtung (105) unabhängig von einer Zustandsgröße ($\theta_{2,i}$, $f_{2,i}$, $\varphi_{2,i}$) der zweiten Oszillation anzusteuern, um eine Antriebswirkung auf die erste Oszillation unter Beeinflussung zumindest einer Zustandsgröße ($\theta_{1,i}$, $f_{1,i}$, $\varphi_{1,i}$) der ersten Oszillation hervorzurufen.

4. Mikroscanner (100) nach einem der vorausgehenden Ansprüche, wobei die Steuerungseinrichtung (195) eingerichtet ist, die Ansteuerung der Antriebseinrichtung (105) zum Hervorrufen der jeweiligen Antriebswirkung auf zumindest eine dadurch angetriebene Oszillation im Sinne einer Regelung in Abhängigkeit von zumindest einer wiederholt erfassten Regelgröße vorzunehmen, die eine Zustandsgröße ($\theta_{1,i}$, $f_{1,i}$, $\varphi_{1,i}$; $\theta_{2,i}$, $f_{2,i}$;, $\varphi_{2,i}$) der jeweils anderen Oszillation ist oder in Abhängigkeit davon festgelegt ist.

5. Mikroscanner (100) nach einem der Ansprüche 1 bis 3, wobei die Steuerungseinrichtung (195) eingerichtet ist, die Ansteuerung der Antriebseinrichtung (105) zum Hervorrufen der jeweiligen Antriebswirkung ($F_1$, $F_2$) auf die jeweils dadurch angetriebene Oszillation im Sinne einer rückführungslosen Steuerung in Abhängigkeit von der zumindest einen erfassten Zustandsgröße ($\theta_{1,i}$; $\theta_{2,i}$) der jeweils anderen Oszillation vorzunehmen.

6. Mikroscanner (100) nach einem der vorausgehenden Ansprüche, wobei die Steuerungseinrichtung (195) des Weiteren eingerichtet ist, die Antriebseinrichtung (105) so anzusteuern, dass dabei die jeweilige Frequenz zumindest einer der Oszillationen in einem vorbestimmten, eine gegenwärtige Resonanzfrequenz ($f_{1R}$, $f_{2R}$) dieser Oszillation umgebenden begrenzten Resonanzbereich gehalten wird.

7. Mikroscanner (100) nach einem der vorausgehenden Ansprüche, wobei der Mindestfrequenzabstand ($f_{TH}$) als konstante Größe festgelegt ist.

8. Mikroscanner (100) nach einem der Ansprüche 1 bis 6 wobei der Mindestfrequenzabstand ($f_{TH}(t)$) als variable Größe festgelegt ist, die von der jeweiligen aktuellen Amplitude ($\theta_{1,i}$; $\theta_{2,i}$) der ersten Oszillation oder der zweiten Oszillation oder von den jeweiligen aktuellen Amplituden ($\theta_{1,i}$; $\theta_{2,i}$) dieser beiden Oszillationen abhängt.

9. Mikroscanner (100) nach einem der vorausgehenden Ansprüche, wobei die Federeinrichtung (135; 135a,b) so ausgebildet ist, dass die Stärke der amplitudenabhängigen gegenseitigen Kopplung ($K_1$; $K_2$) zwischen der ersten Oszillation und der zweiten Oszillation mit jeweils steigender Amplitude ($\theta_{1,i}$; $\theta_{2,i}$) zumindest einer dieser beiden Oszillationen stetig zunimmt.

10. Mikroscanner (100) nach einem der vorausgehenden Ansprüche, wobei der Mikroscanner (100) als biaxialer Mikroscanner ausgebildet ist, bei dem die Ablenkeinheit (101) ein Ablenkelement (130,140) aufweist, das an einem es umgebenden und als Tragegestell dienenden Rahmen (125) mittels dreier rotationssymmetrisch angeordneter Federelemente (135) aufgehängt ist.

11. Mikroscanner (100) nach einem der Ansprüche 1 bis 8, der als biaxialer gimballoser Mikroscanner (100) ausgebildet ist, bei dem:

   die Ablenkeinheit (101) ein Ablenkelement (130,140) aufweist, das an zwei einander gegenüberliegenden Seiten fest eingespannt jeweils mittels einer Biegefeder (135a, 135b) an einem als Tragegestell dienenden Rahmen (125), aufgehängt ist; und
   die Biegefedern (135a, 135b) jeweils zwei an ihren Stirnseiten miteinander verbundene und ansonsten beabstandet nebeneinander verlaufende bogenförmige Abschnitte aufweisen, die um das Ablenkelement (130,140) herum verlaufen, wobei der jeweilige dem Ablenkelement (130,140) benachbarte Abschnitt jeder Biegefeder (135a, 135b) mit dem Ablenkelement (130,140) verbunden ist und der jeweilige dem Rahmen (125) benachbarte Abschnitt jeder Biegefeder (135a, 135b) mit dem Rahmen (125) verbunden ist.

12. Mikroscanner (100) nach einem der vorausgehenden Ansprüche, wobei die Steuerungseinrichtung (195) eingerichtet ist, im Rahmen der Ansteuerung der Antriebseinrichtung (105) zum Antrieb der Ablenkeinheit (101) im Sinne einer Amplitudenanpassung, einer Frequenzanpassung oder einer Phasenanpassung zumindest eine entsprechende Zustandsgröße der ersten Oszillation, der zweiten Oszillation oder jeder dieser beiden Oszillationen jeweils individuell auf einen bestimmten Sollwert einzustellen.

13. Mikroscanner (100) nach einem der vorausgehenden Ansprüche, wobei:
   das Ablenkelement (130,140) mittels der Federeinrichtung (135; 135a,b) gimballos so an der Tragestruktur (125) aufgehängt ist, dass es relativ zur Tragestruktur (125) simultan zusätzlich eine dritte rotatorische Oszillation bezüglich einer dritten, zu der ersten und zweiten Schwingungsachse jeweils orthogonalen Schwingungsachse ausführen kann, um durch Ablenken eines während der drei simultanen Oszillationen auf das Ablenkelement (130,140) einfallenden elektromagnetischen Strahls ($L_1$) eine nichtlineare Lissajous-Projektion in das Beobachtungsfeld (220) zu bewirken, wobei die Federeinrichtung (135; 135a,b) des Weiteren so ausgebildet ist, dass sie eine amplitudenabhängige gegenseitige Kopplung zwischen der dritten Oszillation und der ersten Oszillation, der zweiten Oszillation oder beiden vermittelt.

14. Projektionssystem (200) zum Projizieren von Lissajous-Figuren auf ein Beobachtungsfeld (220), wobei das Projektionssystem (200) eine Mikroscanner (100) nach einem der vorausgehenden Ansprüche aufweist.

15. Projektionssystem (200) nach Anspruch 14, wobei die Steuerungseinrichtung des Weiteren eingerichtet ist, eine Strahlungsquelle mit zumindest einem Modulationssignal zu versorgen, in Abhängigkeit von dem der einfallende elektromagnetische Strahl ($L_1$) moduliert wird.

**Claims**

1.  A microscanner (100) for a projection system (200) for projecting Lissajous figures onto an observation field, wherein the microscanner (100) comprises:

    a deflection unit (101) having a deflection element (130,140) for deflecting an incident electromagnetic beam ($L_1$), a support structure (125), and a spring device (135; 135a,b), wherein the deflection element (130,140) is suspended in a gimballess manner by means of the spring device (135; 135a, b) on the support structure (125) in such a way that, relative to the support structure (125), it can simultaneously perform a first rotary oscillation around a first axis of oscillation ($A_1$) and a second rotary oscillation around a second axis of oscillation ($A_2$) orthogonal thereto to cause a non-linear Lissajous projection in an observation field (220) by deflecting an electromagnetic beam ($L_1$) incident on the deflection element (130, 140) during the simultaneous oscillations; and a control device (195), which is configured to control a drive device (105) for driving the deflection unit (101) in such a way that a respective drive effect ($F_1$; $F_2$) with respect to at least one of the oscillations of the deflection element (130, 140) is adjustable individually; wherein the spring device (135; 135a, b) is furthermore designed in such a way that it mediates an amplitude-dependent mutual coupling ($K_1$; $K_2$) between the oscillations;
    **characterized in that**
    the control device (195) is also configured to control the drive device (105) as a function of at least one detected state variable ($\theta_{1,i}$, $f_{1,i}$, $\varphi_{1,i}$) of the first oscillation in order to cause a drive effect ($F_2$) on the second oscillation thereby influencing at least one state variable ($\theta_{2,i}$, $f_{2,i}$, $\varphi_{2,i}$) of the second oscillation, so that the drive effect ($F_2$) counteracts the respective instantaneous oscillation frequencies ($f_{1,i}$, $f_{2,i}$) of the first oscillation and the second oscillation falling below a predetermined minimum frequency spacing ($f_{TH}$);
    wherein the respective at least one state variable of a respective oscillation is determined by its amplitude ($\theta_{1,i}$; $\theta_{2,i}$), frequency ($f_{1,i}$, $f_{2,i}$), or phase ($\varphi_{1,i}$, $\varphi_{2,i}$) or as a function of at least one of these variables.

2.  The microscanner (100) of claim 1, wherein the control device (195) is further configured to additionally control the drive device (105) as a function of at least one detected state variable ($\theta_{2,i}$, $f_{2,i}$, $\varphi_{2,i}$) of the second oscillation in order to cause a drive effect ($F_1$) on the first oscillation thereby influencing at least one state variable ($\theta_{1,i}$, $f_{1,i}$, $\varphi_{1,i}$) of the first oscillation, which counteracts the respective instantaneous oscillation frequencies ($f_{1,i}$, $f_{2,i}$) of the first oscillation and the second oscillation falling below a predetermined minimum frequency spacing ($f_{TH}$).

3.  The microscanner (100) of claim 1, wherein the control device (195) is configured to control the drive device (105) independently of a state variable ($\theta_{2,i}$, $f_{2,i}$, $\varphi_{2,i}$) of the second oscillation in order to cause a drive effect on the first oscillation thereby influencing at least one state variable ($\theta_{1,i}$, $f_{1,i}$, $\varphi_{1,i}$) of the first oscillation.

4.  The microscanner (100) of any one of the preceding claims, wherein the control device (195) is configured to control the drive device (105) to cause the respective drive effect on at least one oscillation driven thereby in the sense of a closed-loop control as a function of at least one repeatedly detected controlled variable which is a state variable ($\theta_{1,i}$, $f_{1,i}$, $\varphi_{1,i}$; $\theta_{2,i}$, $f_{2,i}$; $\varphi_{2,i}$) of the respective other oscillation or is defined as a function thereof.

5.  The microscanner (100) of any one of claims 1 to 3, wherein the control device (195) is configured to control the drive device (105) to cause the respective drive effect ($F_1$, $F_2$) on the respective oscillation driven thereby in the sense of an open-loop control as a function of the at least one detected state variable ($\theta_{1,i}$; $\theta_{2,i}$) of the respective other oscillation.

6.  The microscanner (100) of any one of the preceding claims, wherein the control device (195) is further configured to control the drive device (105) in such a way that the respective frequency of at least one of the oscillations is kept within a predetermined, limited resonance range surrounding a current resonant frequency ($f_{1R}$, $f_{2R}$) of this oscillation.

7.  The microscanner (100) of any one of the preceding claims, wherein the minimum frequency distance ($f_{TH}$) is defined as a constant value.

8.  The microscanner (100) of any one of claims 1 to 6, wherein the minimum frequency distance ($f_{TH}(t)$) is defined as a variable value that depends on the respective current amplitude ($\theta_{1,i}$; $\theta_{2,i}$) of the first oscillation or the second oscillation or on the respective current amplitudes ($\theta_{1,i}$; $\theta_{2,i}$) of these two oscillations.

9.  The microscanner (100) of any one of the preceding claims, wherein the spring device (135; 135a,b) is designed such that the strength of the amplitude-dependent mutual coupling ($K_1$; $K_2$) between the first oscillation and the second oscillation steadily increases with increasing amplitude ($\theta_{1,i}$; $\theta_{2,i}$) of at least one of these two oscillations.

10. The microscanner (100) of any one of the preceding claims, wherein the microscanner (100) is designed as a biaxial microscanner, in which the deflection unit (101) comprises a deflection element (130,140) that is suspended on a frame (125), which is used as a support frame and surrounds it, by means of three rotationally symmetrically arranged spring elements (135).

11. The microscanner (100) of any one of claims 1 to 8, which is designed as a biaxial gimballless microscanner (100), in which:

the deflection unit (101) comprises a deflection element (130, 140) which is suspended, firmly clamped on two opposite sides in each case by means of a flexible spring (135a, 135b), on a frame (125) used as a support frame; and
the flexible springs (135a, 135b) each have two curved sections which are connected to one *another* at their end faces and otherwise extend spaced apart adjacent to one another and which extend around the deflection element (130, 140), wherein the respective section of each flexible spring (135a, 135b) adjacent to the deflection element (130, 140) is connected to the deflection element (130, 140) and the respective section of each flexible spring (135a, 135b) adjacent to the frame (125) is connected to the frame (125).

12. The microscanner (100) of any one of the preceding claims, wherein the control device (195) is configured, in the context of the controlling of the drive device (105) to drive the deflection unit (101) in the sense of an amplitude adjustment, a frequency adjustment, or a phase adjustment, to set at least one corresponding state variable of the first oscillation, the second oscillation, or each of these two oscillations individually to a specific setpoint value.

13. The microscanner (100) of any one of the preceding claims, wherein:
the deflection element (130, 140) is suspended in a gimballess manner on the support structure (125) by means of the spring device (135; 135a,b) in such a way that it can simultaneously additionally execute a third rotational oscillation relative to the support structure (125) with respect to a third oscillation axis that is orthogonal in each case to the first and second oscillation axes, in order to, by deflecting an electromagnetic beam ($L_1$) incident on the deflection element (130,140) during the three simultaneous oscillations, cause a non-linear Lissajous projection in the observation field (220), wherein the spring device (135; 135a, b) is further designed in such a way that it mediates an amplitude-dependent mutual coupling between the third oscillation and the first oscillation, the second oscillation, or both.

14. A projection system (200) for projecting Lissajous figures on an observation field (220), wherein the projection system (200) comprises a microscanner (100) of any one of the preceding claims.

15. The projection system (200) of claim 14, wherein the control device is further configured to supply a radiation source with at least one modulation signal as a function of which the incident electromagnetic beam ($L_1$) is modulated.

**Revendications**

1. Micro-scanner (100) pour un système de projection (200) pour projeter des figures de Lissajous sur un champ d'observation, le micro-scanner (100) comprenant:

une unité de déviation (101) avec un élément de déviation (130, 140) pour dévier un faisceau électromagnétique incident ($L_1$), une structure de support (125) et un dispositif à ressort (135; 135a, b), dans lequel l'élément de déviation (130, 140) est suspendu au moyen du dispositif à ressort (135; 135a, b) sur la structure de support (125) de telle sorte qu'il peut effectuer simultanément par rapport à la structure de support (125) une première oscillation rotative autour d'un premier axe d'oscillation ($A_1$) et une deuxième oscillation rotative autour d'un deuxième axe d'oscillation ($A_2$) orthogonal à celui-ci, pour provoquer une projection non linéaire de Lissajous dans un champ d'observation (220) par déviation d'un faisceau électromagnétique ($L_1$) incident sur l'élément de déviation (130, 140) pendant les oscillations simultanées; et
un dispositif de commande (195) qui est configuré pour commander un dispositif d'entraînement (105) pour entraîner l'unité de déviation (101) de telle sorte qu'un effet d'entraînement respectif ($F_1$; $F_2$) par rapport à au moins l'une des oscillations de l'élément de déviation (130, 140) peut être réglé individuellement;
dans lequel le dispositif à ressort (135; 135a, b) est en outre réalisé de telle sorte qu'il communique un couplage mutuel ($K_1$; $K_2$) dépendant de l'amplitude entre les oscillations;

**caractérisé en ce que**
le dispositif de commande (195) est conçu pour commander le dispositif d'entraînement (105) en fonction d'au moins une grandeur d'état détectée ($\theta_{1,i}$, $f_{1,i}$, $\varphi1_{,i}$) de la première oscillation, pour provoquer un effet d'entraînement (F2) sur la deuxième oscillation en influençant au moins une grandeur d'état ($\theta2_{,i}$, $f2_{,i}$, $\varphi2_{,i}$) de la deuxième oscillation, de telle sorte que l'effet d'entraînement (F2) s'oppose à un sous-dépassement d'un écart de fréquence minimal prédéterminé (fTH) entre les fréquences d'oscillation instantanées respectives ($f1_{,i}$, $f2_{,i}$) de la première oscillation et de la deuxième oscillation;
dans lequel l'au moins une grandeur d'état respective d'une oscillation respective est déterminée par son amplitude ($\theta_{1,i}$; $\theta_{2,i}$), sa fréquence ($f_{1,i}$, $f_{2,i}$) ou sa phase ($\varphi1_{,i}$, $\varphi2_{,i}$) ou en fonction d'au moins l'une de ces grandeurs.

2. Micro-scanner (100) selon la revendication 1, dans lequel le dispositif de commande (195) est en outre conçu pour commander le dispositif d'entraînement (105) en outre en fonction d'au moins une grandeur d'état détectée ($\theta_{2,i}$, $f_{2,i}$, $\varphi2_{,i}$) de la deuxième oscillation, pour provoquer un effet d'entraînement (F1) sur la première oscillation en influençant au moins une grandeur d'état ($\theta1_{,i}$, $f1_{,i}$, $\varphi1_{,i}$) de la première oscillation, qui s'oppose à un sous-dépassement d'un écart de fréquence minimal prédéterminé (fTH) entre les fréquences d'oscillation instantanées respectives ($f1_{,i}$, $f2_{,i}$) de la première oscillation et de la deuxième oscillation.

3. Micro-scanner (100) selon la revendication 1, dans lequel le dispositif de commande (195) est conçu pour commander le dispositif d'entraînement (105) indépendamment d'une grandeur d'état ($\theta_{2,i}$, $f_{2,i}$, $\varphi2_{,i}$) de la deuxième oscillation, pour provoquer un effet d'entraînement sur la première oscillation en influençant au moins une grandeur d'état ($\theta1_{,i}$, $f1_{,i}$, $\varphi1_{,i}$) de la première oscillation.

4. Micro-scanner (100) selon l'une quelconque des revendications précédentes, dans lequel le dispositif de commande (195) est conçu pour effectuer la commande du dispositif d'entraînement (105) pour provoquer l'effet d'entraînement respectif sur au moins une oscillation ainsi entraînée dans le sens d'une régulation en fonction d'au moins une grandeur de régulation détectée de manière répétée, qui est une grandeur d'état ($\theta_{1,i}$, $f_{1,i}$, $\varphi1,i$; $\theta2_{,i}$, $f2,i$; $\varphi2_{,i}$) de l'autre oscillation respective ou est fixée en fonction de celle-ci.

5. Micro-scanner (100) selon l'une quelconque des revendications 1 à 3, dans lequel le dispositif de commande (195) est conçu pour effectuer la commande du dispositif d'entraînement (105) pour provoquer l'effet d'entraînement respectif ($F_1$, $F_2$) sur l'oscillation ainsi entraînée respective dans le sens d'une commande sans rétroaction en fonction de l'au moins une grandeur d'état détectée ($\theta_{1,i}$; $\theta_{2,i}$) de l'autre oscillation respective.

6. Micro-scanner (100) selon l'une quelconque des revendications précédentes, dans lequel le dispositif de commande (195) est en outre conçu pour commander le dispositif d'entraînement (105) de telle sorte que la fréquence respective d'au moins l'une des oscillations est maintenue dans une plage de résonance prédéterminée limitée entourant une fréquence de résonance actuelle ($f_{1R}$, $f_{2R}$) de cette oscillation.

7. Micro-scanner (100) selon l'une quelconque des revendications précédentes, dans lequel l'écart de fréquence minimal ($f_{TH}$) est fixé en tant que grandeur constante.

8. Micro-scanner (100) selon l'une quelconque des revendications 1 à 6, dans lequel l'écart de fréquence minimal ($f_{TH}(t)$) est fixé en tant que grandeur variable qui dépend de l'amplitude actuelle respective ($\theta_{1,i}$; $\theta_{2,i}$) de la première oscillation ou de la deuxième oscillation ou des amplitudes actuelles respectives ($\theta_{1,i}$; $\theta_{2,i}$) de ces deux oscillations.

9. Micro-scanner (100) selon l'une quelconque des revendications précédentes, dans lequel le dispositif à ressort (135; 135a, b) est réalisé de telle sorte que l'intensité du couplage mutuel ($K_1$; $K_2$) dépendant de l'amplitude entre la première oscillation et la deuxième oscillation augmente constamment avec l'augmentation respective de l'amplitude ($\theta_{1,i}$; $\theta_{2,i}$) d'au moins l'une de ces deux oscillations.

10. Micro-scanner (100) selon l'une quelconque des revendications précédentes, dans lequel le micro-scanner (100) est réalisé sous forme de micro-scanner biaxial, dans lequel l'unité de déviation (101) comprend un élément de déviation (130, 140) qui est suspendu à un cadre (125) l'entourant et servant de bâti de support au moyen de trois éléments à ressort (135) disposés de manière symétrique en rotation.

11. Micro-scanner (100) selon l'une quelconque des revendications 1 à 8, qui est réalisé sous forme de micro-scanner biaxial sans gimbal (100), dans lequel :

l'unité de déviation (101) comprend un élément de déviation (130, 140) qui est suspendu à un cadre (125) servant de bâti de support au moyen d'un ressort de flexion (135a, 135b) de manière serrée fixement sur deux côtés opposés l'un à l'autre; et

les ressorts de flexion (135a, 135b) comprennent chacun deux sections en forme d'arc reliées l'une à l'autre au niveau de leurs côtés frontaux et s'étendant par ailleurs à distance l'une de l'autre, qui s'étendent autour de l'élément de déviation (130, 140), la section respective de chaque ressort de flexion (135a, 135b) adjacente à l'élément de déviation (130, 140) étant reliée à l'élément de déviation (130, 140) et la section respective de chaque ressort de flexion (135a, 135b) adjacente au cadre (125) étant reliée au cadre (125).

12. Micro-scanner (100) selon l'une quelconque des revendications précédentes, dans lequel le dispositif de commande (195) est conçu pour régler, dans le cadre de la commande du dispositif d'entraînement (105) pour entraîner l'unité de déviation (101) dans le sens d'une adaptation d'amplitude, d'une adaptation de fréquence ou d'une adaptation de phase, au moins une grandeur d'état correspondante de la première oscillation, de la deuxième oscillation ou de chacune de ces deux oscillations individuellement à une valeur de consigne déterminée.

13. Micro-scanner (100) selon l'une quelconque des revendications précédentes, dans lequel :
l'élément de déviation (130, 140) est suspendu au moyen du dispositif à ressort (135; 135a, b) sur la structure de support (125) de telle sorte qu'il peut effectuer simultanément en outre par rapport à la structure de support (125) une troisième oscillation rotative par rapport à un troisième axe d'oscillation respectivement orthogonal aux premier et deuxième axes d'oscillation, pour provoquer une projection non linéaire de Lissajous dans le champ d'observation (220) par déviation d'un faisceau électromagnétique ($L_1$) incident sur l'élément de déviation (130, 140) pendant les trois oscillations simultanées, dans lequel le dispositif à ressort (135; 135a, b) est en outre réalisé de telle sorte qu'il communique un couplage mutuel dépendant de l'amplitude entre la troisième oscillation et la première oscillation, la deuxième oscillation ou les deux.

14. Système de projection (200) pour projeter des figures de Lissajous sur un champ d'observation (220), le système de projection (200) comprenant un microscanner (100) selon l'une quelconque des revendications précédentes.

15. Système de projection (200) selon la revendication 14, dans lequel le dispositif de commande est en outre conçu pour alimenter une source de rayonnement avec au moins un signal de modulation, en fonction duquel le faisceau électromagnétique ($L_1$) incident est modulé.

**Fig. 1**

**Fig. 2**

300, 120

130,140

135

125

A1

A2

**Fig. 3**

400

120 V auf

80 V auf

40 V auf

120 V ab

80 V ab

40 V ab

Amplitude [beliebige Einheiten]

Frequenz [Hz]

**Fig. 4**

500, 120

136a 137a

135a

A1

125

A2

135b

130, 140

136b 137b

**Fig. 5**

600

**Fig. 6**

**Fig. 7**

$800$

$\theta_{2,i}(t)$

$f_{TH}(t)$

$K_2(\theta_{1,i}(t);\theta_{2,i}(t))$

$\underline{197}$

| 197a | $\theta_{2,s}(t, \theta_{1,i}(t))$ | 197b | 197c | $V_2(t)$ | | 105 | $F_2(t)$ | | 101 | 180 |

$F_1(t)$

$\Delta\varphi_2(t) = \varphi(\theta_{2,s}(t)) - \varphi(\theta_{2,i}(t))$
$\Delta\theta_2(t) = \theta_{2,s}(t) - \theta_{2,i}(t)$
$\Delta f_2(t) = f_{2,s}(t) - f_{2,i}(t)$

$K_1(\theta_{1,i}(t);\theta_{2,i}(t))$

$\theta_{1,i}(t)$

$\underline{196}$

| 196d | $\theta_{1,s}(t)$ | 196a |

$V_1(t)$

$195$

**(A)**

$810$

$f$

$f_{1,i}$

$\Delta f$

$f_{2,i}$

$\Delta f$

$\Delta f$

$f_{TH}$

$\Delta f$

$t_0$  $t_1$  $t_2$  $t_3$  $t_4$  $t_5$  $t_6$  $t_7$  $t$

**(B)**

# Fig. 8

$$\Delta\varphi_2(t) = \varphi(\theta_{2,s}(t)) - \varphi(\theta_{2,i}(t))$$
$$\Delta\theta_2(t) = \theta_{2,s}(t) - \theta_{2,i}(t)$$
$$\Delta f_2(t) = f_{2,s}(t) - f_{2,i}(t)$$

$$\Delta\varphi_1(t) = \varphi(\theta_{1,s}(t)) - \varphi(\theta_{1,i}(t))$$
$$\Delta\theta_1(t) = \theta_{1,s}(t) - \theta_{1,i}(t)$$
$$\Delta f_1(t) = f(\theta_{1,s}(t)) - f(\theta_{1,i}(t))$$

**Fig. 9**

$\theta_{2,i}(t)$

1000

$$\Delta\varphi_2(t) = \varphi(\theta_{2,s}(t)) - \varphi(\theta_{2,i}(t))$$
$$\Delta\theta_2(t) = \theta_{2,s}(t) - \theta_{2,i}(t)$$
$$\Delta f_2(t) = f_{2,s}(t) - f_{2,i}(t)$$

$$\Delta\varphi_1(t) = \varphi(\theta_{1,s}(t)) - \varphi(\theta_{1,i}(t))$$
$$\Delta\theta_1(t) = \theta_{1,s}(t) - \theta_{1,i}(t)$$
$$\Delta f_1(t) = f(\theta_{1,s}(t)) - f(\theta_{1,i}(t))$$

## Fig. 10

**IN DER BESCHREIBUNG AUFGEFÜHRTE DOKUMENTE**

**In der Beschreibung aufgeführte Patentdokumente**

- EP 2514211 B1
- US 20120320379 A1
- EP 3447560 A1
- EP 3173843 A1
- EP 3751328 A1
- US 20190162948 A1

**In der Beschreibung aufgeführte Nicht-Patentliteratur**

- **HOFMANN et al.** Resonant biaxial 7-mm MEMS mirror for omnidirectional scanning. *J. Micro/Nano-lith. MEMS MOEMS*, January 2014, vol. 13 (1), 3-11